(19) Europäisches Patentamt European Patent Office Office européen des brevets

(11) **EP 3 660 537 A1**

(12) **EUROPÄISCHE PATENTANMELDUNG**

(43) Veröffentlichungstag:
**03.06.2020  Patentblatt 2020/23**

(21) Anmeldenummer: **19209160.1**

(22) Anmeldetag: **28.02.2018**

(51) Int Cl.:
**G01S 7/40** (2006.01)    **G01S 7/35** (2006.01)
**G01S 13/00** (2006.01)    **G01S 13/90** (2006.01)

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**MA MD TN**

(30) Priorität: **02.03.2017  DE 102017104377**
              **10.05.2017  DE 102017110063**

(62) Dokumentnummer(n) der früheren Anmeldung(en) nach Art. 76 EPÜ:
**18708108.8 / 3 589 971**

(71) Anmelder:
• **Symeo GmbH**
  **85579 Neubiberg (DE)**
• **Friedrich-Alexander-Universität Erlangen-Nürnberg**
  **91054 Erlangen (DE)**

(72) Erfinder:
• **VOSSIEK, Martin**
  **90766 Fürth (DE)**
• **GOTTINGER, Michael**
  **91054 Bockenhof (DE)**
• **GULDEN, Peter**
  **85435 Erding (DE)**
• **CHRISTMANN, Mark**
  **81825 München (DE)**

(74) Vertreter: **Pfrang, Tilman**
    **Meissner Bolte Patentanwälte**
    **Rechtsanwälte Partnerschaft mbB**
    **Widenmayerstraße 47**
    **80538 München (DE)**

Bemerkungen:
Diese Anmeldung ist am 14-11-2019 als Teilanmeldung zu der unter INID-Code 62 erwähnten Anmeldung eingereicht worden.

(54)    **VERFAHREN UND VORRICHTUNG ZUR UMFELDERFASSUNG**

(57)    Die Erfindung betrifft ein Radar-System zur Erfassung eines Umfeldes eines sich bewegenden Objektes, insbesondere eines Fahrzeuges und/oder einer Transportvorrichtung, wie insbesondere eines Kranes, wobei das System auf dem sich bewegenden Objekt montiert oder montierbar ist, wobei das Radar-System mindestens zwei nicht-kohärente Radarmodule (RM 1, RM 2, ..., RM N) mit mindestens einer Sende- und mindestens einer Empfangsantenne umfasst, wobei die Radarmodule (RM 1, RM 2, ..., RM N) auf dem sich bewegenden Objekt verteilt angeordnet oder anordenbar sind, wobei mindestens eine Auswerteeinrichtung vorgesehen ist, die konfiguriert ist, Sende- und Empfangssignale der Radarmodule zu modifizierten Messsignalen zu verarbeiten derart, dass die modifizierten Messsignale zueinander kohärent sind.

Fig. 1

**EP 3 660 537 A1**

**Beschreibung**

Die Erfindung betrifft ein Radar-System zur Erfassung eines Umfeldes eines sich bewegenden Objektes sowie ein entsprechendes Verfahren.

Im Stand der Technik wird Radar zur Erfassung des Umfeldes eines bewegten Objektes, wie beispielsweise eines Fahrzeuges, insbesondere eines autonomen Fahrzeuges, eines Roboters (oder eines Teiles davon), einer Krananlagen (oder eines Teiles davon) etc. eingesetzt. Dabei wird eine möglichst exakte Erfassung des Umfeldes insbesondere in Bezug auf Entfernung, laterale Position, Geschwindigkeit und ggf. Eigenbewegung angestrebt. Die exakte Erfassung besteht sowohl aus einer guten Trennung (Unterscheidung) einzelner Ziele als auch aus einer möglichst genauen Erfassung der einzelnen getrennten Ziele.

Die Entfernungsauflösung für ein Radar beträgt in erster Näherung:

$$\Delta d = \frac{c}{2B}$$

mit c als Lichtgeschwindigkeit und B als Bandbreite des Signals.

Die Auflösung der Geschwindigkeit beträgt für gleichgroße Ziele in erster Näherung:

$$\Delta v = \frac{c}{2T_{sw} \cdot f_c}$$

mit $T_{SW}$ als Messdauer und $f_c$ als Mittenfrequenz ("center frequency") des Radarsignals.

Die laterale Auflösung wird üblicherweise in Polarkoordinaten bezogen auf den Ursprung der Radarwelle angegeben und beträgt:

$$\Delta \alpha = 0{,}67 \cdot \frac{c}{f_{start} \cdot l_{ant}}$$

Mit $f_{start}$ als Startfrequenz des Signals, $l_{ant}$ als Ausdehnung der Antennen (bzw. der Apertur der Antenne in der Ebene, in der der Winkel gemessen wird).

Die mit üblichen Radarsystemen (in den freigegebenen Frequenzbändern) erreichbare Tiefen- und Geschwindigkeitsauflösung bzw. -genauigkeit sind dabei für die meisten Aufgaben im Bereich Umfelderfassung ausreichend. Wesentlicher limitierender Faktor in der Umfelderfassung sind die bisher erreichte Winkelauflösung (d.h. die Fähigkeit, mehrere nebeneinanderliegende Ziele über dem Winkel zu trennen bzw. auflösen zu können) und die Genauigkeit der Winkelmessung.

Gemäß dem Stand der Technik kann eine hohe Winkelauflösung und -genauigkeit über ein großes, räumlich ausgedehntes Antennenarray realisiert werden, wie beispielsweise in Hardware Realization of a 2 m x 1 m Fully Electronic Real-Time mm-Wave Imaging System, A. Schiessl, A. Genghammer, S. Ahmed, L.-P. Schmidt, EUSAR 2012, oder BLASTDAR - A Large Radar Sensor Array System for Blast Furnace Burden Surface Imaging, D. Zankl et al., IEEE Sensor Jounal, Vol. 15, No. 10, Oct. 2015.

Im Stand der Technik müssen sämtliche Sende- und Empfangspfade aus der gleichen HF-Quelle gespeist werden. Hier und im Folgenden steht "HF" für Hochfrequenz, also insbesondere für eine Frequenz über 100 MHz, vorzugsweise über 1 GHz. Es werden entsprechend große Hochfrequenzsubstrate benötigt, die technisch aufwändig in Fertigung und Handhabung sind. Zudem können HF-Antennen ab bestimmter Größe im Hinblick auf Ausstrahlung und Kohärenzlänge der einzelnen Pfade problematisch sein. Hinzu kommt eine starre Anordnung der Antennen auf einem HF-Substrat. Anordnungen mit mehreren Substraten und Verbindungskabeln dazwischen sind bei den üblich verwendeten Frequenzen (oftmals oberhalb 10 GHz) technisch sehr komplex bzw. nicht phasenstabil umsetzbar und stellen damit keine praktische Alternative dar. Insgesamt wird es im Stand der Technik als problematisch angesehen, dass bekannte Verfahren zur Erhöhung der (lateralen) Genauigkeit und Auflösung von Radarsystemen vergleichsweise komplex und aufwändig sind bzw. in der Praxis nicht umsetzbar sind.

Die Aufgabe der Erfindung besteht darin, ein Verfahren bzw. ein System zur Umfelderfassung vorzuschlagen, das mit geringem Aufwand eine vergleichsweise hohe (laterale) Genauigkeit und Auflösung ermöglicht.

Diese Aufgabe wird insbesondere durch ein Radar-System zur Erfassung eines Umfeldes eines sich bewegenden Objekts nach Anspruch 1 sowie ein entsprechendes Verfahren nach Anspruch 14 gelöst.

Insbesondere wird die Aufgabe gelöst durch ein Radar-System zur Erfassung eines Umfeldes eines sich bewegenden Objektes, insbesondere eines Fahrzeuges und/oder einer Transportvorrichtung, wie insbesondere eines Kranes, wobei das System auf dem sich bewegenden Objekt montiert oder montierbar ist, wobei das Radar-System mindestens zwei (nicht-kohärente) Radarmodule mit mindestens einer Sende- und mindestens einer Empfangsantenne umfasst, wobei die Radarmodule auf dem sich bewegenden Objekt verteilt angeordnet oder anordenbar sind, wobei mindestens eine Auswerteeinrichtung vorgesehen ist, die konfiguriert ist, Sende- und Empfangssignale der Radarmodule zu modifizierten Messsignalen zu verarbeiten derart, dass die modifizierten Messsignale zueinander kohärent sind (wie wenn die Sende- und Empfangssignale, aus denen diese abgeleitet wurden, aus einer gemeinsamen Quelle stammen).

Ein Kerngedanke der Erfindung liegt darin, das Radar-System so zu konfigurieren, dass die Sende- und Empfangssignale der Radarmodule zu modifizierten Messsignalen (im Postprocessing) verarbeitet werden, derart dass aus den (grundsätzlich zueinander nicht-kohärenten) Signalen, kohärente, modifizierte Messsignale erzeugt werden. Dadurch liegen Signale vor, die einerseits aus dem Sende- und Empfangssignal abgeleitet sind und andererseits derart kohärent sind, wie wenn sie aus einer gemeinsamen Quelle stammen. Dadurch kann auf einfache Art und Weise die Genauigkeit und die Auflösung des Radar-Systems (deutlich) verbessert werden.

Die mindestens zwei Radarmodule sind vorzugsweise über ein Bussystem miteinander verbunden. Im Allgemeinen können die mindestens zwei Radarmodule jeweils eine eigenständige Baueinheit ausbilden. Die mindestens zwei Radarmodule können voneinander (räumlich) getrennt sein bzw. beabstandet voneinander sein (beispielsweise um mindestens 10 cm).

Vorzugsweise ist das Radar-System so konfiguriert, dass

- in einem ersten Radarmodul ein erstes Signal erzeugt und über einen Pfad gesendet, insbesondere ausgestrahlt wird (bzw. werden kann),

- in einem weiteren, insbesondere zweiten Radarmodul ein weiteres erstes Signal erzeugt und über den Pfad gesendet, insbesondere ausgestrahlt wird (bzw. werden kann),

- in der Auswerteeinrichtung, insbesondere in dem ersten Radarmodul ein erstes Vergleichssignal aus dem erstem Radarmodul und aus einem solchen von dem weiteren Radarmodul, über den Pfad empfangenen, ersten Signal gebildet wird (bzw. werden kann),

- in der Auswerteeinrichtung, insbesondere in dem weiteren Radarmodul ein erstes Vergleichssignal aus dem ersten Signal des weiteren Radarmoduls und aus einem solchen von dem ersten Radarmodul, über den Pfad empfangenen, ersten Signal gebildet wird (bzw. werden kann),

- wobei das weitere Vergleichssignal vorzugsweise von dem weiteren Radarmodul zu dem ersten Radarmodul übertragen, insbesondere kommuniziert wird.

Ein derartiges System ist in einem anderen Zusammenhang grundsätzlich aus DE 10 2014 104 273 A1 bekannt. Insbesondere hinsichtlich der Weiterbildungen des in dem vorangehenden Absatzes beschriebenen Systems wird daher auf die DE 10 2014 104 273 A1 verwiesen, deren Offenbarungsgehalt Bestandteil der vorliegenden Offenbarung sein soll (insbesondere im Hinblick auf Weiterbildungen bzw. Spezifizierungen des in dem vorangehenden Absatz beschriebenen Aspektes). In diesem Zusammenhang ist darauf hinzuweisen, dass die in DE 10 2014 104 273 A1 genannten Sende-Empfangseinheiten integraler Bestandteil der in der vorliegenden Offenbarung genannten Radarmodule sein können. Insgesamt wird durch eine derartige Funktionalität insbesondere in Kombination mit Verfahren zu Radarbildgebung mit einfachem Aufwand die Auflösung und Genauigkeit der Umfelderfassung deutlich verbessert. Insbesondere kann eine Erzeugung einer Kohärenz der Grundsignale zur Folge haben, dass ein Verfahren zur Radarbildgebung auf das dadurch mögliche größere Array angewandt werden kann. Das Radarbildgebungsverfahren kann dann von dem größeren Array profitieren.

Besonders bevorzugt ist das Radar-System, insbesondere die Auswerteeinrichtung zur Bildung eines Vergleichs-Vergleichssignals aus dem ersten Vergleichssignal und dem weiteren Vergleichssignal konfiguriert. Auch hinsichtlich der Bildung des Vergleichs-Vergleichssignals wird auf DE 10 2014 104 273 A1 verwiesen, wobei durch Verweis der diesbezügliche Offenbarungsgehalt Bestandteil der vorliegenden Offenbarung sein soll.

Im Folgenden wird das Verfahren bzw. die entsprechende Konfiguration gemäß DE 10 2014 104 273 A1 zur Schaffung von modifizierten, kohärenten (Mess-) Signalen als "Verfahren I" bzw. "Konfiguration I" bezeichnet.

Eine Weiterbildung bzw. Modifikation des Verfahrens I bzw. der Konfiguration I ist in der noch nicht veröffentlichten deutschen Patentanmeldung mit der Anmeldenummer 10 2016 100 107.4 sowie der entsprechenden internationalen Patentanmeldung mit der Anmeldenummer PCT/EP2017/050056 beschrieben. Die Offenbarung dieser Anmeldungen soll ebenfalls durch Bezugnahme Gegenstand der Offenbarung der vorliegenden Anmeldung sein, insbesondere im Hinblick auf die Bildung der kohärenten (Mess-) Signale. Das Verfahren bzw. die Konfiguration zur Bildung der kohärenten (Mess-) Signale gemäß den eben genannten Anmeldungen soll im Folgenden als "Verfahren II" bzw. "Konfiguration II" bezeichnet werden.

Vorzugsweise (wie grundsätzlich gemäß Verfahren II bzw. Konfiguration II) ist das System, insbesondere die Auswerteeinrichtung konfiguriert, um in einem ersten Schritt Abweichungen der Vergleichssignale, die durch systematische Abweichungen in den Radarmodulen hervorgerufen werden, zu kompensieren und um in einem zweiten Schritt zumindest einen komplexen Wert aus einem ersten der beiden Vergleichssignale oder aus einem Signal, das aus diesem ersten Vergleichssignal abgeleitet wurde, dazu zu verwenden, zumindest einen komplexen Wert des zweiten der beiden Vergleichssignale oder einen Wert eines Signals, das aus diesem zweiten Vergleichssignal abgeleitet wurde, anzupassen und so ein angepasstes Signal zu bilden, wobei die Anpassung derart geschieht, dass durch eine mathematische Operation die vektorielle Summe oder die Differenz der komplexen Werte gebildet wird, oder die Summe oder die Differenz der Phasen der komplexen Werte gebildet wird.

Weiterbildungen und Spezifikationen des Verfahrens II bzw. der Konfiguration II werden weiter unten noch im Detail beschrieben. Insgesamt wird durch das Verfahren II bzw. die Konfiguration II ein Radar-System realisiert, das im vorliegenden Fall der Umfelderfassung insbesondere in Kombination mit Verfahren zur Radarbildgebung eine besonders hohe Auflösung bzw. Genauigkeit in der Erfassung mit einfachen Mitteln und insbesondere ohne besonders großen Rechenaufwand erlaubt.

Vorzugsweise (wie grundsätzlich in DE 10 2014 104 273 A1 beschrieben) kann das Vergleichs-Vergleichssignal, in dem die beiden Vergleichssignale miteinander verarbeitet - insbesondere konjugiert komplex multipliziert werden - einem mit einem kohärenten Radar-System erzeugten Vergleichssignal entsprechen.

Das erste und/oder zweite Radarmodul weist/weisen (jeweils) vorzugsweise mindestens eine, weiter vorzugsweise mindestens zwei (insbesondere eigene) Sendeantenne(n) und/oder mindestens eine, vorzugsweise mindestens zwei (insbesondere eigene) Empfangsantenne(n) auf. Alternativ oder zusätzlich weist/weisen das erste und/oder das zweite Radarmodul (jeweils) höchstens vier, vorzugsweise höchstens drei (insbesondere eigene) Sendeantennen und/oder höchstens fünf (vorzugsweise höchstens vier) Empfangsantennen auf. Die Radarmodule weisen also vorzugsweise mindestens eine Sende- und mindestens eine Empfangsantenne auf. Die Sendeantenne und die Empfangsantenne können auch als (gemeinsame) Sende- und Empfangsantenne (also als eine einzige Antenne sowohl zum Senden als auch zum Empfangen) ausgeführt sein. Vorzugsweise werden mehrere Sende- und Empfangsantennen auf einem Modul untergebracht, wobei weiter vorzugsweise 1 bis 3 Sendeantennen und 2 bis 4 Empfangsantennen vorliegen (was sich als ein vorteilhafter Kompromiss zwischen Baugröße und Array-Besetzung für den vorliegenden Anwendungsfall erwiesen hat). Die Radarmodule umfassen (jeweils) vorzugsweise eine Vorrichtung zur Erzeugung des HF-Signals (HF-Generator). Weiterhin können die Radarmodule eine Vorrichtung (umfassend eine oder mehrere Antennen) zum Versenden des HF-Signals sowie eine Vorrichtung (umfassend eine oder mehrere Antennen) zum Empfangen des HF-Signals aufweisen. Weiterhin können die Radarmodule (jeweils) eine Vorrichtung zum Umsetzen des HF-Signals auf eine niedrigere Frequenzebene, z.B. mittels Mischer oder Korrelator, aufweisen. Vorzugsweise weisen die Radarmodule (jeweils) eine eigene (lokale) Taktquelle für den Systemtakt und ggf. einen AD-Wandler auf.

Die Radarmodule können verteilt angeordnet sein, beispielsweise um ein Fahrzeug herum und/oder nach vorne blickend zur Abdeckung der Bewegungsrichtung oder beispielsweise nach unten blicken, insbesondere bei einer Krananlage. Die Radarmodule können dann entweder untereinander oder mit einer zentralen Recheneinheit (Auswerteeinheit) die empfangenen Signale austauschen. Dies geschieht vorzugsweise über einen (digitalen) Datenbus.

Durch die räumliche Verteilung der einzelnen Radarmodule kann eine gemeinsame Apertur des gesamten Radarsystems gebildet werden. Antennen der (einzelnen) Radarmodule können einzelne Antennenelemente darstellen. Vorzugsweise werden die Radarmodule vergleichsweise weit auseinander angeordnet, beispielsweise in einem Abstand von mindestens 5 cm, vorzugsweise mindestens 10 cm, noch weiter vorzugsweise mindestens 40 cm. Ein Maximalabstand kann kleiner als 10 m, vorzugsweise kleiner als 5 m, noch weiter vorzugsweise kleiner als 2 m, noch weiter vorzugsweise kleiner als 1,50 m sein. Alternativ oder zusätzlich werden die Radarmodule so weit auseinander angeordnet, dass die daraus resultierende Apertur unterbesetzt ist (d.h. über einen vollständigen Antennenarray nur ein geringerer Anteil an Sende- und Empfangsantennen bzw. Sende- und Empfangs-Patches vorhanden ist; Sparse-Array). Derartige unterbesetzte Arrays weisen in der Regel hohe Nebenkeulen auf. Dies lässt sich durch einzelne Anordnungen optimieren. Besonders bevorzugt werden mindestens drei Radarmodule eingesetzt, wodurch sich die Nebenkeulen weiter unterdrücken lassen. Unter einem unterbesetzten Array (Sparse-Array) ist insbesondere ein Array zu verstehen, bei dem ein Abstand zwischen den einzelnen Sende- und Empfangseinrichtungen (Antennen) größer als $\lambda/2$ ($\lambda$ = (durchschnittliche) Wellenlänge der gesendeten Signale) ist. Insbesondere ist ein Sparse Array auch eine Anordnung, in der die Sende- und Empfangsantennen nicht in einem periodischen Gitter vollbesetzt angeordnet sind.

Vorzugsweise wird (insbesondere nach der Montage der einzelnen Radarmodule) eine Kalibrationsmessung mit den Radarmodulen durchgeführt (vorzugsweise auf ein in der Position genau bekanntes einzelnes Ziel). Durch einen Vergleich des tatsächlich gemessenen Winkels mit einem vorgegebenen Winkel können dabei für jeden Empfangspfad (optimale) Korrekturfaktoren berechnet werden. Besonders bevorzugt ist es dabei, die (komplexen) Korrekturterme für jeden Empfangspfad so anzupassen, dass ein Peak für das bekannte Ziel möglichst hoch und schmal wird. Dadurch können unterschiedliche Phasen-Offsets der Radarmodule kompensiert werden.

Insbesondere wenn in den gemessenen Signalen eine Redundanz (bezüglich der gemessenen Winkel) vorhanden ist (was insbesondere bei Verwendung von Radarmodulen mit mehreren Sende- und Empfangspfaden der Fall sein kann), ist es besonders vorteilhaft, eine Selbst-Kalibration durchzuführen, bei der die exakte Position einzelner Ziele *a priori* nicht bekannt sein muss. Im Sinne eines Optimierungsproblems können dabei die (komplexen) Korrekturterme adaptiv so angepasst werden, dass die Schätzung des Winkels zu einem Ziel von allen Radarmodulen aus ein (möglichst) konsistentes Ergebnis liefert.

Vorzugsweise ist das Radarsystem, insbesondere die Auswerteeinrichtung, konfiguriert, eine Winkellage einer Umgebungsstruktur mittels Phasenmonopuls-Verfahren zu bestimmen. Alternativ oder zusätzlich kann das System, insbesondere die Auswerteeinrichtung konfiguriert sein, mittels eines Verfahrens im Zustandsraum eines/die Winkellage einer/der Umgebungsstruktur zu schätzen, insbesondere zu bestimmen. Allgemein kann das Radarsystem konfiguriert sein, dass zuerst eine Trennung von Zielen nach Entfernungs- und Geschwindigkeitskriterien, beispielsweise mittels Range-Doppler-Auswertung, erfolgt. Anschließend kann dann durch eine Prozessierung mittels Interferometrie (in der Radartechnik auch Phasenmonopuls-Verfahren genannt) der Winkel bestimmt werden. Beispielsweise kann hier in einem ersten Schritt für jeden Empfangskanal ein Range-Doppler-Diagramm generiert werden. Anschließend kann für bestimmte Ziele in einem Radarspektrum eine Phasendifferenz zwischen zwei (dicht) nebeneinanderliegenden Kanälen bestimmt werden. Anschließend kann die Phasendifferenz zu einem weiter entfernt befindlichen Kanal bestimmt werden, um die Genauigkeit zu erhöhen. Hier kann die Genauigkeit durch die (nun) deutlich vergrößerte Basislänge zwischen den Kanälen erhöht werden. Zur Verbesserung bzw. Erhöhung der Winkelauslösung (insbesondere zur Verbesserung der Nebenkeulenunterdrückung) werden vorzugsweise Verfahren im Zustandsraum verwendet. Dabei kann vorzugsweise das MUSIC-Verfahren nach Multiple Emitter - Location and Signal - Parameter Estimation, R. Schmidt, IEEE TRANSACTIONS ON ANTENNAS AND PROPAGATION, VOL. AP-34, NO.3, MARCH 1986 (besonders bevorzugt für die Nebenkeulenunterdrückung bei Sparse-Arrays), verwendet werden. Alternativ oder zusätzlich kann das Capon-Verfahren nach High-Resolution Frequency-Wavenumber Spectrum Analysis, J. Capon, Proceedings of the IEEE, Vol. 57, No. 8, August 1969, verwendet werden. Insbesondere ist das Capon-Verfahren zu bevorzugen, da es keine Annahme über die Anzahl der Ziele benötigt. Eine solche Schätzung kann bei Zustandsraumverfahren anhand eines Betrages von Eigenwerten einer Kovarianz-Matrix durchgeführt werden und ist, insbesondere mit kohärenten Signalen, in der Praxis vergleichsweise schwierig durchführbar, da sich diese betragsmäßig nicht deutlich unterscheiden. Verglichen mit der Anwendung dieser Verfahren für die direction-of-arrival Schätzung unter Verwendung der Fernfeldnäherung sollte bei dieser Anwendung vorzugsweise eine Korrektur der zu überprüfenden Hypothese (in diesem Kontext als "steering vector" bezeichnet) durchgeführt werden. Dies kann beispielsweise mit einer Hypothese eines holographischen Verfahrens (dazu weiter unten im Detail), ggf. nach Berechnung eines Beat-Spektrums geschehen. Alternativ kann auch eine geschlossene Lösung mittels bekannter Verfahren verwendet werden, die jedoch vergleichsweise rechenintensiv sind.

Vorzugsweise ist das System, insbesondere die Auswerteeinrichtung konfiguriert, eine Umgebungsstruktur mittels Holographie-Verfahren zu erfassen, weiter vorzugsweise mittels Holographie-Verfahren eine Winkellage und/oder eine, insbesondere vektorielle (relative), Geschwindigkeit und/oder eine, insbesondere vektorielle (relative), Beschleunigung der Umgebungsstruktur zu schätzen. Alternativ oder zusätzlich ist das System, insbesondere die Auswerteeinrichtung konfiguriert, eine Kalibration mittels Holographie-Verfahren durchzuführen.

Vorzugsweise ist das Radar-System, insbesondere die Auswerteeinrichtung konfiguriert, eine (laterale) Geschwindigkeit bzw. einen Geschwindigkeitsvektor, insbesondere mittels eines Verfahrens zum Vergleich einer Änderung von Differenzphasen von Empfangskanälen zu bestimmen. Alternativ oder zusätzlich ist das System, insbesondere die Auswerteeinrichtung vorzugsweise konfiguriert, eine (laterale) Beschleunigung bzw. einen Beschleunigungsvektor, insbesondere mittels eines Verfahrens zum Vergleich einer Änderung von Differenzphasen von Empfangskanälen, zu bestimmen.

Grundsätzlich kann eine wesentlich vergrößerte Apertur auch für eine Verbesserung der (vektoriellen) Bewegungsschätzung verwendet werden. Bisherige Radar-Systeme schätzen üblicherweise lediglich eine radiale Geschwindigkeit eines Systems über den Dopplereffekt. Es besteht jedoch die Möglichkeit, zusätzlich über mehrere Empfangskanäle die Veränderung einer Phasendifferenz zwischen den Kanälen zu schätzen. Daraus kann eine laterale Geschwindigkeit geschätzt werden. Diese grundsätzlichen Überlegungen liefern jedoch erst bei einem größeren Abstand der Antennen präzise Ergebnisse. Besonders bevorzugt wird daher ein Sparse-Array aufgebaut, um mit mindestens zwei Modulen in einem größeren Abstand (von beispielsweise größer 10 cm) eine präzise Schätzung durchführen zu können. Eine bevorzugte Realisierung einer Auswertung kann dabei im FMCW-Chirp-Sequence-Verfahren durchgeführt werden. Dabei kann beispielsweise zuerst ein Burst von mehreren, z.B. 128, Frequenzrampen (mit gleicher Steigung) von den mindestens zwei Radarmodulen gleichzeitig (bzw. zeitlich überlappend) gesendet werden. Die empfangenen Signale können dann beispielsweise nach S. Roehr, P. Gulden, and M. Vossiek, "Precise Distance and Velocity Measurement for Real Time Locating in Multipath Environments Using a Frequency-Modulated Continuous-Wave Secondary Radar Approach, "IEEE Trans. Microw. Theory Tech., vol. 56, no. 10, pp. 2329-2339, Oct. 2008, getrennt werden. Es kann dann ein Prozessierungsschritt gemäß beispielsweise dem Verfahren II bzw. der Konfiguration II für einen indirekten Pfad erfolgen. Anschließend kann (für jeden Pfad) ein Range-Doppler-Diagramm errechnet werden und die Objektposition und -geschwindigkeit bestimmt werden. Die Bestimmung der Winkellage aus der Phasendifferenz der Empfangskanäle kann dabei nach bekannten Methoden (beispielsweise mittels Phasenmonopuls oder Holographie) erfolgen. Anschließend kann eine Differenzphasenänderung von Rampe zu Rampe bestimmt werden (Winkelgeschwindigkeit). Diese kann dann mit einer gemessenen Entfernung in die laterale Geschwindigkeit umgerechnet werden. Somit kann dann die vektorielle Geschwindigkeit als Summe der lateralen und radialen Geschwindigkeit bestimmt werden. Dieses Verfahren verbessert die Umfelderfassung erheblich, da dann der komplette Bewegungsvektor der Objekte im Umfeld vorliegt. Die Messgenauigkeit der lateralen Geschwindigkeit wird verbessert, wenn ein Abstand zwischen den Radarmodulen (eine Basis zwischen den Modulen) groß ist.

Zusätzlich zur (lateralen) Geschwindigkeit lässt sich auch insbesondere bei der Verwendung von mindestens drei Empfangsantennen eine (laterale) Beschleunigung (durch nochmaliges Differenzieren bzw. Subtrahieren der Phasendifferenzänderungen) bestimmen. Bestimmt man dann ggf. aus mindestens drei nacheinander aufgenommenen Radarspektren eine radiale Beschleunigung, kann damit auch die vektorielle Beschleunigung bestimmt werden. Auch in diesem Zusammenhang ist es besonders vorteilhaft, wenn die Antennen einen vergleichsweise großen Abstand voneinander aufweisen.

Grundsätzlich gilt erst ab einem Zielabstand von $r = \frac{2 \cdot L^2 \cdot f}{c}$ die Nahfeldnäherung, wobei L die räumliche Ausdehnung der Antennenapertur ist, f die Sendefrequenz und c die Lichtgeschwindigkeit. Für das Beispiel eines Arrays von 1 m Breite und einer Sendefrequenz von 76 GHz ist die Gültigkeit der Nahfeldnäherung erst ab ca. 507 m gegeben. Daher wird bei großen Arrays das Radarbild vorteilhafterweise holographisch berechnet, beispielsweise nach A Rotating Synthetic Aperture Radar Imaging Concept for Robot Navigation, F. Ali, G. Bauer und M. Vossiek, IEEE TRANSACTIONS ON MICROWA VE THEORY AND TECHNIQUES, VOL. 62, NO. 7, JULY 2014. Diese Offenbarung ist hiermit, durch Bezugnahme, Bestandteil der vorliegenden Offenbarung (insbesondere im Hinblick auf die holographische Berechnung).

Das System, insbesondere die Auswerteeinrichtung, ist vorzugsweise für eine SAR-Anwendung und/oder ein (SAR-) Bildgebungsverfahren konfiguriert. SAR steht hierbei für Synthetic Aperture Radar. Insbesondere die Verwendung einer großen (verteilten) Apertur ist vorteilhaft für SAR-Anwendungen.

Vorzugsweise sind die Radarmodule auf dem sich bewegenden Objekt auf unterschiedlicher Höhe angeordnet oder anordenbar, insbesondere zur Vermessung einer Höhe eines Umgebungsobjektes in einem Umfeld des sich bewegenden Objektes, vorzugsweise mittels (interferometrischer) SAR-Prozessierung. Die Radarmodule können beispielsweise in vertikaler Richtung einen Abstand von mindestens 5 cm, vorzugsweise mindestens 10 cm, noch weiter vorzugsweise mindestens 25 cm aufweisen. Beispielsweise kann/können in einer Stoßstange eines Kraftfahrzeuges und ein zweites Radarmodul auf/in dem Dach des Kraftfahrzeuges und/oder mindestens ein Radarmodul im Bereich des Innenspiegels angeordnet sein. Insgesamt wird die Höhenmessung bzw. Höhenerkennung, beispielsweise für automatische Einparkvorgänge, deutlich verbessert.

Vorteilhaft ist auch eine Anordnung mit drei oder mehr Systemen in unterschiedlichen Höhen. Hierbei kann dann eine Laufzeitdifferenz zwischen mehreren, insbesondere allen, Stationen herangezogen werden, insbesondere auch gemäß dem Vorgehen in der zum Anmeldezeitpunkt noch nicht veröffentlichten deutschen Patentanmeldung mit der Anmeldenummer DE 10 2015 121 724.4 bzw. der korrespondierenden internationalen Patentanmeldung mit der Anmeldenummer PCT/EP2016/07596.

In einer bevorzugten Ausführungsform erfolgt eine Korrektur eines Phasenrauschen, bzw. von Phasenvariationen (wobei das System, insbesondere die Auswertereinrichtung, entsprechend konfiguriert sein kann). Vorzugsweise ist das System, insbesondere die Auswerteeinrichtung, konfiguriert, einen Phasenrauschanteil in einen Term für eine Variation innerhalb eines Messspektrums (bzw. eines Sweeps oder einer Rampe) und eine Variation von Messspektrum zu Messspektrum (bzw. von Sweep zu Sweep oder von Rampe zu Rampe) zu gliedern. Vorzugsweise wird die Variation von Messspektrum zu Messspektrum als erster (separater) Schritt bestimmt (und ggf. korrigiert). Dadurch kann die Genauigkeit eines Messergebnisses deutlich verbessert werden. Vorzugsweise wird eine/die Variation des Phasenrauschanteils von Messspektrum zu Messspektrum als (gemeinsamer) Anteil in beiden Stationen aus der (gemeinsamen) Variation der Phase in jedem Spektrum bestimmt, vorzugsweise über das Skalarprodukt der beiden Messspektren. Vorzugsweise erfolgt eine Addition zweier (der beiden) Messspektren. Auch durch diese Maßnahmen wird die Genauigkeit des Messergebnisses verbessert. Optional kann vorher eine Normierung der Amplituden der Spektren auf ein absolutes Normal oder zueinander erfolgen. Insbesondere kann auf einfache Art und Weise eine Korrektur von Phasenrauschen bzw. Phasenvariationen erfolgen.

Ggf. kann (insbesondere vor einer Korrektur des Phasenrauschens) ein (vorzugsweise differentielle) Korrektur von Drift und/oder Jitter und/oder eine Korrektur (insbesondere nach der Korrektur von Drift bzw. Jitter) eines Laufzeit- und/oder Frequenzoffsets erfolgen. Insbesondere die in diesem und dem vorherigen Absatz genannten Aspekte sind auch als Weiterbildung des Verfahrens I oder des Verfahrens II (optional) unabhängige Gegenstände der vorliegenden Erfindung. In diesem Zusammenhang sind dann die weiteren Merkmale des Anspruches 1 (sowie der weiteren unabhängigen Ansprüche) ggf. nur optional. Beispielsweise können die Radar-Module in diesem Fall stationär angeordnet sein.

Ein (optional unabhängiger) Aspekt der Erfindung ist (demnach) ein Radar-System (mit bewegbaren oder stationären Radar-Modulen bzw. nicht-kohärenten Sende-Empfangseinheiten), insbesondere zur Erfassung eines Umfeldes eines (sich bewegenden oder sich nicht-bewegenden) Objektes, wobei das System insbesondere auf dem Objekt montiert oder montierbar ist,

wobei das Radar-System mindestens zwei (insbesondere verteilt angeordnete) nicht-kohärente Radarmodule mit mindestens einer Sende- und mindestens einer Empfangsantenne umfasst,

wobei die Radarmodule insbesondere auf dem Objekt verteilt angeordnet oder anordenbar sind,

wobei mindestens eine Auswerteeinrichtung vorgesehen ist, die konfiguriert ist, Sende- und Empfangssignale der Radarmodule zu modifizierten Messsignalen zu verarbeiten derart, dass die modifizierten Messsignale zueinander kohärent sind,

wobei eine Korrektur eines Phasenrauschens bzw. von Phasenvariationen (wobei das System, insbesondere die Auswertereinrichtung, entsprechend konfiguriert sein kann) erfolgt. Vorzugsweise ist das (ggf. stationäre) System, insbesondere die Auswerteeinrichtung, konfiguriert, einen Phasenrauschanteil in einen Term für eine Variation innerhalb eines Messspektrums (bzw. eines Sweeps oder einer Rampe) und eine Variation von Messspektrum zu Messspektrum (bzw. von Sweep zu Sweep oder von Rampe zu Rampe) zu gliedern. Vorzugsweise wird die Variation von Messspektrum zu Messspektrum als erster (separater) Schritt bestimmt (und ggf. korrigiert). Vorzugsweise wird eine/die Variation des Phasenrauschanteils von Messspektrum zu Messspektrum als (gemeinsamer) Anteil in beiden Stationen aus der (gemeinsamen) Variation der Phase in jedem Spektrum bestimmt, vorzugsweise über das Skalarprodukt der beiden Messspektren. Vorzugsweise erfolgt eine Addition zweier (der beiden) Messspektren. Optional kann vorher eine Normierung der Amplituden der Spektren auf ein absolutes Normal oder zueinander erfolgen. Insbesondere kann auf einfache Art und Weise eine Korrektur von Phasenrauschen bzw. Phasenvariationen erfolgen.

Ein weiterer (optional unabhängiger) Aspekt der Erfindung ist (demnach) ein Radar-Verfahren (unter Verwendung von bewegbaren oder stationären Radar-Modulen bzw. nicht-kohärenten Sende-Empfangseinheiten), insbesondere zur Erfassung eines Umfeldes eines (sich bewegenden oder nicht-bewegenden) Objektes, insbesondere unter Verwendung des obigen Systems und/oder des obigen Objektes, wobei auf und/oder in dem Objekt mindestens zwei nicht-kohärente Radarmodule verteilt angeordnet sind,

wobei Sende- und Empfangssignale der Radarmodule zu modifizierten Messsignalen verarbeitet werden derart, dass die modifizierten Messsignale zueinander kohärent sind, wobei eine Korrektur eines Phasenrauschens bzw. von Phasenvariationen erfolgt. Vorzugsweise wird ein Phasenrauschanteil in einen Term für eine Variation innerhalb eines Messspektrums (bzw. eines Sweeps oder einer Rampe) und eine Variation von Messspektrum zu Messspektrum (bzw. von Sweep zu Sweep oder von Rampe zu Rampe) gegliedert. Vorzugsweise wird die Variation von Messspektrum zu Messspektrum als erster (separater) Schritt bestimmt (und ggf. korrigiert). Vorzugsweise wird eine/die Variation des Phasenrauschanteils von Messspektrum zu Messspektrum als (gemeinsamer) Anteil in beiden Stationen aus der (gemeinsamen) Variation der Phase in jedem Spektrum bestimmt, vorzugsweise über das Skalarprodukt der beiden Messspektren. Vorzugsweise erfolgt eine Addition zweier (der beiden) Messspektren. Optional kann vorher eine Normierung der Amplituden der Spektren auf ein absolutes Normal oder zueinander erfolgen. Insbesondere kann auf einfache Art und Weise eine Korrektur von Phasenrauschen bzw. Phasenvariationen erfolgen.

Unter einem Pfad ist insbesondere eine (Luft-) Schnittstelle zu verstehen, über die die entsprechenden Signale (und ggf. Vergleichssignale) mittels Antennen gesendet bzw. übertragen und empfangen werden können.

Unter einem indirekten Pfad (Weg) bzw. einem Kreuzpfad ist der Pfad (Weg) eines Signals zu verstehen, das von einem (beispielsweise dem zweiten) Radarmodul stammt und von einem anderen (beispielsweise dem ersten) Radarmodul empfangen wird. Entsprechend ist unter einem direkten Pfad ein Signal zu verstehen, das von ein- und demselben Radarmodul sowohl gesendet als auch (als reflektiertes Signal) empfangen wird.

Unter einem nicht-kohärenten Radarmodul ist ein Radarmodul zu verstehen, dessen gesendetes Signal in Bezug auf das Signal eines weiteren Radarmoduls nicht-kohärent ist (auch wenn das Signal des ersten Radarmoduls bzw. des weiteren Radarmoduls in sich kohärent ist).

Soweit in dem (jeweiligen) Radarmodul Berechnungen, Auswertungen oder sonstige Verfahrensschritte durchgeführt werden, fällt darunter auch eine ggf. körperlich eigenständige Auswerteeinrichtung, welche an dem Radarmodul angeschlossen ist. Beispielsweise kann das jeweilige Radarmodul so als eine Anordnung aus insbesondere einer oder mehreren Antennen mit einigen wenigen signalerzeugenden oder signalverarbeitenden Komponenten ausgebildet sein, während weitere Komponenten wie Signalvergleichseinheiten oder eine Auswerteeinrichtung als konstruktiv eigenständige Komponenten an eine solche Anordnung angeschlossen sind. Soweit Komponenten eingesetzt werden, können diese, soweit technisch realisierbar, als sogenannte Hardware aus verarbeitenden Komponenten ausgebildet sein und/oder als ganz oder teilweise in einem Prozessor ausgeführte Signal bzw. Datenverarbeitungsschritte umgesetzt werden.

Im Allgemeinen kann die Auswerteeinrichtung Bestandteil eines oder mehrerer (beider) Radarmodule sein oder an einer oder mehreren (beiden) solcher Radarmodule angeschlossen sein. Ggf. kann eine körperlich eigenständige Auswerteeinrichtung vorgesehen sein, die an das jeweilige Radarmodul bzw. die übrigen Komponenten des jeweiligen Radarmoduls angeschlossen ist. Alternativ kann die Auswerteeinrichtung ggf. in das erste und/oder das weitere (nicht-kohärente) Radarmodul, beispielsweise in einem gemeinsamen Gehäuse und/oder als Baueinheit, integriert sein.

Entscheidend ist in jedem Fall (unabhängig davon, wo konkret die Auswerteeinrichtung angeordnet ist), dass ein Kreuzpfad (indirekter Pfad) entstehen kann, d.h. dass eine Überdeckung von Sende- und Empfangsbereichen entsprechend vorgesehen ist.

Im Folgenden wird das Verfahren II bzw. die Konfiguration II weiter beschrieben, wobei die (nicht-kohärenten) Sende- und Empfangseinheiten Bestandteil der weiter vorne beschriebenen Radarmodule sein sollen (bzw. diese ausbilden sollen). Die nicht-kohärenten Sende- und Empfangseinheiten werden auch als NKSE abgekürzt.

Gemäß dem Verfahren II werden zwischen den NKSE übertragene Signale derart verarbeitet, dass Vergleichssignale entstehen, die vorteilhafte Eigenschaften aufweisen, die sonst eigentlich nur Radarsignale aufweisen, die mit nur einer gemeinsamen Vorrichtung zur Signalerzeugung, also mit einer kohärenten Signalquelle arbeiten. Gegenstand des Verfahrens II sind insbesondere Verfahren zur Reduzierungen von störenden Effekten, die durch das nicht korrelierte Phasenrauschen der mehreren eigenständigen Vorrichtungen zur Signalerzeugung hervorgerufen werden.

Das Verfahren II ist besonders vorteilhaft auf die erfindungsgemäßen verteilt angeordnete Radarmodule, die ein Netzwerk bilden können, anwendbar.

Im Bereich der Radarsignalverarbeitung möchte man die empfangenen Signale zu möglichst rauscharmen Zwischenfrequenzsignal umsetzen, um eine hohe Genauigkeit und große Reichweite zu erreichen. Dabei ist davon auszugehen, dass es mehrere Ausbreitungspfade zwischen Sender und Empfänger gibt. Prinzipiell ist es möglich, die empfangenen Mehrpfadausbreitungen und korrelierten Rauschanteile durch Bandpassfilterung mit einem, exakt auf die zu erwartende Frequenz, abgestimmten Filter zu unterdrücken. In der Praxis ist dieses Verfahren jedoch schlecht durchführbar, da Synchronisationsfehler der Abtastzeitpunkte und der Lokaloszillatorfrequenzen in den jeweiligen NKSEs eine genaue Vorhersage der, nach dem Mischvorgang generierten, Beatsignale nur in beschränktem Rahmen zulässt. Aufgrund dieser Probleme wird die Korrelation des Phasenrauschens dieser beiden Signale reduziert und der Schätzfehler der Phase nimmt zu.

Vorteilhaft sind daher Verfahren mit Berechnungsschritten, in denen die Einflüsse von Phasenrauschen und Synchronisationsfehlern reduziert oder komplett unterdrückt werden.

Das Verfahren II beginnt damit, dass zumindest zwei NKSE nahezu gleichzeitig senden. Nahezu gleichzeitig bedeutet in diesem Zusammenhang, dass die Sendesignale sigTX1 und sigTX2 zumindest für einen großen Teil ihrer Signaldauer in beide Richtungen, also sigTX1 von NKSE1 nach NKSE2 und sigTX2 von NKSE2 nach NKSE1 übertragen werden. Der zunächst ggf. unbekannte Unterschied der Startzeitpunkte der Sendesignale sigTX1 und sigTX2 ist als T_off bezeichnet. Anzustreben sind möglichst gleiche Sendezeitpunkte, die Verschiebung T_off sollte vorzugsweise nicht größer als die Hälfte der Signaldauer, in jedem Fall jedoch kleiner als die Signaldauer sein. Dabei weisen auf Grund der zumindest teilweise eigenständigen Erzeugung die Signale sigTX1 und sigTX2 nichtkorrelierte Signalanteile auf, die auf das Phasenrauschen der Signalquellen in den Stationen NKSE1 und NKSE2 zurückzuführen sind.

In einer solchen Anordnung werden vorzugsweise dieselben Antennen zum Senden (Tx) und zum Empfangen (Rx) verwendet, um die Reziprozität der Übertragungskanäle sicherzustellen. Bei Anordnungen in einem Array ist (z.B. bei MIMO) sicherstellen, dass vorzugsweise zumindest einer der Übertragungswege reziprok ist. Besonders geeignet zum Erreichen der Reziprozität ist die Verwendung eines Transmissionsmischers in zumindest einem Sende- und Empfangspfad der NKSE. Eine beispielhafte Realisierungsform eines Transmissionsmischers in einer Radaranordnung wird zum Beispiel in US 6,317,075 B1 ausgeführt.

Als weiterer Schritt werden dann in jeder NKSE die Vergleichssignale (sigC21; sigC12) gebildet und zwar zwischen dem jeweils empfangenen Signal und dem Sendesignal oder mit einem mit dem Sendesignal bzgl. des Phasenrauschens korrelierten Anteil des Sendesignals. Das Verfahren zur Bildung dieser Vergleichssignale entspricht dem Vorgehen in Patentanmeldung DE 10 2014 104 273 A1.

Erfindungsgemäß werden dann Phasenrauschen und Synchronisationsfehler zumindest reduziert, indem die Verarbeitung der empfangenen Signale in zwei Stufen durchgeführt wird: Als erster Schritt werden systematische Abweichungen korrigiert, entweder vor dem Empfang der Signale über eine Ansteuerung der Signalquelle, und/oder über eine Kompensation der direkt im empfangenen Signal und/oder über eine Kompensation im Vergleichssignal. Als zweiter Schritt erfolgt dann beispielsweise eine verkürzte Auswertung der Korrelation bzw. die Bildung eines Vergleichs-Vergleichssignales nur für den erwarteten Verschiebungsbereich oder im besten Falle in nur einem Verschiebungswert.

Besonders vorteilhaft ist im zweiten Schritt, in Verfahren II anders als in DE 10 2014 104 273 A1 ausgeführt, keine Multiplikation zur Phasenkompensation, sondern eine Addition der komplexen Signale zu verwenden. Die Verwendung der Addition anstatt der Multiplikation wird durch den zuvor beschriebenen ersten Schritt der Verarbeitung, also durch die vorherige Kompensation der systematischen Abweichungen möglich.

Ein Multiplikation oder Division der Signale stellt eine nichtlineare Operation dar. Nichtlineare Operationen gehen stets mit nichtlinearen Effekten, also hier insbesondere mit sogenannten Intermodulationen von Signal- und Rauschanteilen, einher. Dies führt insbesondere bei Radarsignalen mit mehreren Signalkomponenten, d.h. bei Signalen, die mehrere Ziele oder mehrere Signalübertragungspfade umfassen, zu Störungen. Die gemäß Verfahren II vorgeschlagene Verwendung der Addition der komplexen Signale hat den großen Vorteil, dass die Addition eine lineare Operation ist, wodurch nichtlineare Effekte, also insbesondere Intermodulationen von Signal- und Rauschanteilen, vermieden werden. Diese Ausführungsvariante führt also in der Regel zu einer deutlich besseren Reduzierung des Phasenrauschens im Vergleich zu Verfahren zur Kombination der Vergleichssignale sigC21 und sigC12.

Dadurch wird im Verfahren II das Phasenrauschen/der Einfluss des Phasenrauschens unterdrückt, ohne dass die vorher genannten zusätzlichen Störeinflüsse entstehen, wie sie bei DE 10 2014 104 273 A1 zu erwarten wären. Zudem ist dieser Ansatz technisch vorteilhaft, da er einen deutlich geringeren Rechenaufwand als die als Ausführungsform in DE 10 2014 104 273 A1 vorgeschlagene komplette Multiplikation oder Korrelation benötigt.

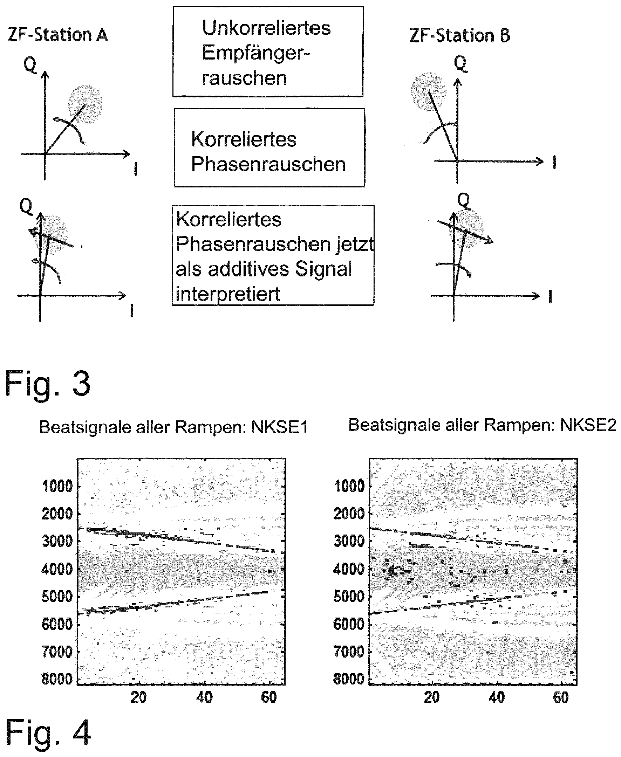

Um den Vorgang gemäß Verfahren II durchführen zu können, wird vorzugsweise zunächst eine präzise, entweder direkte (per steuerbarer Hardware) und/oder synthetische (rechnerische) Synchronisation durchgeführt, um den Frequenzversatz (möglichst weitgehend) zu kompensieren. Dann kann eine linearisierte Betrachtung verwendet werden, die nur bei geringen, residualen Phasenunterschieden eine Aufhebung des korrelierten Anteils der Störung bewirkt (Prinzip dargestellt in Fig. 3).

Die Synchronisation kann dabei vor der Messung separat durchgeführt werden, im Rahmen der Messung selber, oder im Anschluss an die Messung. Bei einer Synchronisation im Rahmen der Messung oder im Anschluss daran kann die Synchronisation beispielsweise über nachträgliches Anpassen des Vergleichssignals erfolgen.

Zur Synchronisation können Mittel oder Verfahren vorgesehen werden, die dazu geeignet sind, die Taktraten der Quellen von sigTX1 und sigTX2 entweder direkt (z. B. mittels TCXO) oder rechnerisch (synthetische Synchronisation) aneinander anzupassen.

Es können alle bekannten Verfahren zum Angleichen von Taktquellen in verteilten Stationen verwendet werden. Besonders vorteilhafte Ansätze zur Synchronisation sind Verfahren nach Patent US 7,940,743, nach Patentanmeldung DE102008010536, bzw. der Austausch von Referenztakten bzw. Referenzsignalen. Ein weiteres Verfahren zum Taktangleich innerhalb der Messungen für FMCW Signale wird weiter unten beschrieben.

Alle diese Verfahren zum Angleichen der Taktquellen können entweder über Funkwellen oder über Kabelverbindungen umgesetzt werden. Kabelgebunden kann elektrische Signale oder optische Signale, die von Kabeln geführt werden, bedeuten.

Alternativ oder zur Verbesserung zu den Verfahren zum Angleichen von Taktquellen können auch sehr hochwertige Taktquellen, beispielsweise Atomuhren, verwendet werden.

Nach dem Schritt der Synchronisation können aus den Vergleichssignalen Signale (sigEP21, sigEP12) abgeleitet werden, die jeweils eine Funktion darstellen, die als Funktionsargument die Signallaufzeit bzw. die Länge des Übertragungskanals der jeweiligen Signalkomponenten aufweist.

Der Offset T_off zwischen den Stationen wird dann beispielsweise durch die in DE 101 57 931 offenbarten Verfahren bestimmt, oder durch eine Korrelation der Vergleichssignale der mindestens zwei NKSE. Dabei kann das Maximum den Offset liefern. Alternativ kann auch das weiter unten für FMCW Signale beschriebene Verfahren zum Einsatz kommen. Wie zuvor können die Verfahren kabelgebunden oder mittels Funkwellen durchgeführt werden.

Aus dem Signal sigEP21 ist zumindest ein Funktionswert F1 bestimmbar, der einer bestimmten Laufzeit zuzuordnen ist und zumindest ein weiterer Funktionswert F2 des Signals sigEP12, der möglichst exakt derselben Laufzeit zuzuordnen ist. F1 mit F2 werden dann miteinander verrechnet. Diese Verrechnung erfolgt beispielsweise durch eine Addition oder Differenzbildung der beiden Laufzeitwerte.

Damit können Störungen, die durch die nichtkorrelierten Signalanteile der Signale sigTX1 und sigTX2, die auf das Phasenrauschen der Signalquellen zurückzuführen sind, eliminiert bzw. zumindest reduziert werden.

Die Schritte von Verfahren II werden im Folgenden zusammengefasst:

Verfahren zur Verringerung von Störungen durch Phasenrauschen in einem Radarsystem, bei dem

- in einer ersten nicht-kohärenten Sende-Empfangseinheit (NKSE1) ein erstes Signal (sigTX1) erzeugt und über einen Pfad (SP) gesendet, insbesondere ausgestrahlt wird,

- in einer weiteren, insbesondere zweiten nicht-kohärenten Sende-Empfangseinheit (NKSE2) ein (weiteres) erstes Signal (sigTX2) erzeugt und über den Pfad (SP) gesendet, insbesondere ausgestrahlt wird,

- die Signale (sigTX1 und sigTX2) in der jeweils anderen Sende-Empfangseinheit auf direktem oder indirektem Weg empfangen werden und dort als Empfangssignale sigRX12 und sigRX21 weiterverarbeitet werden,

- in der ersten Sende-Empfangseinheit (NKSE1) ein Vergleichssignal (sigC12) aus deren erstem Signal (sigTX1) und aus einem solchen von der weiteren Sende-Empfangseinheit (NKSE2) über den Pfad (SP) empfangenen ersten Signal (sigRTX2) gebildet wird und

- in der weiteren Sende-Empfangseinheit (NKSE2) ein weiteres Vergleichssignal (sigC21) aus deren erstem Signal (sigTX2) und aus einem solchen von der ersten Sende-Empfangseinheit (NKSE1) über den Pfad (SP) empfangenen ersten Signal (sigTX1) gebildet wird,

- wobei das weitere Vergleichssignal (sigC21) von der weiteren Sende-Empfangseinheit (NKSE2) zu der ersten Sende-Empfangseinheit (NKSE1) übertragen, insbesondere kommuniziert wird,

- wobei in einem ersten Schritt Abweichungen der Signale sigC21 und sigC12, die durch systematische Abweichungen in den Sende-Empfangseinheiten (NKSE2, NKSE1) hervorgerufen werden, kompensiert werden,

- wobei in einem zweiten Schritt zumindest ein komplexer Wert aus einem ersten der beiden Vergleichssignale oder aus einem Signal, das aus diesem ersten Vergleichssignal abgeleitet wurde, dazu verwendet wird zumindest einen komplexen Wert des zweiten der beiden Vergleichssignale oder einen Wert eines Signals, das aus diesem zweiten Vergleichssignal abgeleitet wurde, anzupassen und so ein (angepasstes) Signal (sigCC) zu bilden,

- wobei die Anpassung derart geschieht, dass durch eine mathematische Operation die vektorielle Summe oder die Differenz der komplexen Werte gebildet wird oder die Summe oder die Differenz der Phasen der komplexen Werte gebildet wird.

Ausführungsbeispiele werden nachfolgend anhand der Figuren näher erläutert.
Es zeigen:

Fig. 1          zwei miteinander kommunizierende Sende-Empfangseinheiten und einzelne derer Komponenten;

Fig. 2          die Komponenten aus Fig. 1 mit Veranschaulichung eines Verfahrensablaufs;

Fig. 3          oben Beat-Signale der beiden Sende-Empfangseinheiten mit nichtkorrelierten Rauschanteilen vor der Synchronisation und unten ein synthetisches Mischprodukt mit korreliertem Phasenrauschen nach der Synchronisation;

Fig. 4          Spektrogramme aller Rampen von der beiden Sende-Empfangseinheiten vor der Synchronisation;

Fig. 5          eine schematische Darstellung einer Anordnung von mehreren Radarmodulen;

Fig. 6A-6C   verschiedene Ausführungsformen für an einem Kraftfahrzeug verteilte Radarmodule;

Fig. 7          ein Diagramm über eine holographische Auswertung;

Fig. 8          eine schematische Darstellung einer SAR-Bildgebung;

Fig. 9          eine schematische Darstellung zu einem interferometrischen SAR;

Fig. 10        eine schematische Darstellung eines Fahrzeugs mit Sensoranordnung;

Fig. 11a       ein Spektrogramm für das erste Radarmodul, wobei die horizontale Achse eine Entfernung in Meter und die vertikale Achse eine Chirp-bzw. Rampennummer angibt;

Fig. 11b       ein Spektrogramm für das zweite Radarmodul, wobei die horizontale Achse eine Entfernung in Meter und die vertikale Achse eine Chirp-bzw. Rampennummer angibt;

Fig. 12a       ein weiteres Spektrogramm für das erste Radarmodul, wobei nur eine Primärantwort ausgewertet wurde, wobei die horizontale Achse eine Entfernung in Meter und die vertikale Achse eine Chirp- bzw. Rampennummer angibt;

Fig. 12b       ein weiteres Spektrogramm für das zweite Radarmodul, wobei nur eine Primärantwort ausgewertet wurde, wobei die horizontale Achse eine Entfernung in Meter und die vertikale Achse eine Chirp- bzw. Rampennummer angibt;

Fig. 13a    ein weiteres Spektrogramm für das erste Radarmodul, nach einer Korrektur von Drift und Jitter, wobei die horizontale Achse eine Entfernung in Meter und die vertikale Achse eine Chirp- bzw. Rampennummer angibt;

Fig. 13b    ein weiteres Spektrogramm für das zweite Radarmodul, nach einer Korrektur von Drift und Jitter, wobei die horizontale Achse eine Entfernung in Meter und die vertikale Achse eine Chirp- bzw. Rampennummer angibt;

Fig. 14a    ein weiteres Spektrogramm für das erste Radarmodul, nach einer Korrektur von Zeit- und Frequenzoffset, wobei die horizontale Achse eine Entfernung in Meter und die vertikale Achse eine Chirp- bzw. Rampennummer angibt;

Fig. 14b    ein weiteres Spektrogramm für das zweite Radarmodul, nach einer Korrektur von Zeit- und Frequenzoffset, wobei die horizontale Achse eine Entfernung in Meter und die vertikale Achse eine Chirp- bzw. Rampennummer angibt;

Fig. 15a    ein Phasenverlauf für das erste Radarmodul, ohne Korrektur einer Phasenabweichung, wobei die horizontale Achse eine Chirp- bzw. Rampennummer und die vertikale Achse eine Phase in Radiant angibt;

Fig. 15b    ein Phasenverlauf für das zweite Radarmodul, ohne Korrektur einer Phasenabweichung, wobei die horizontale Achse eine Chirp- bzw. Rampennummer und die vertikale Achse eine Phase in Radiant angibt;

Fig. 16a    ein Phasenverlauf für das erste Radarmodul, mit Korrektur einer Phasenabweichung, wobei die horizontale Achse eine Chirp- bzw. Rampennummer und die vertikale Achse eine Phase in Radiant angibt;

Fig. 16b    ein Phasenverlauf für das zweite Radarmodul, mit Korrektur einer Phasenabweichung, wobei die horizontale Achse eine Chirp- bzw. Rampennummer und die vertikale Achse eine Phase in Radiant angibt;

Fig. 17a    2D-(FFT-)Spektrum für den Kreuzpfad des ersten Radarmoduls, mit Korrekturen von Drift und Jitter sowie Zeit- und Frequenzoffset, wobei die horizontale Achse eine Geschwindigkeit in Meter pro Sekunde und die vertikale Achse eine Magnitude in Dezibel (dB) angibt;

Fig. 17b    2D-(FFT-)Spektrum für den Kreuzpfad des zweiten Radarmoduls, mit Korrekturen von Drift und Jitter sowie Zeit- und Frequenzoffset, wobei die horizontale Achse eine Geschwindigkeit in Meter pro Sekunde und die vertikale Achse eine Magnitude in Dezibel (dB) angibt;

Fig. 18a    2D-(FFT-)Spektrum für den Kreuzpfad des ersten Radarmoduls, mit Korrekturen von Drift und Jitter sowie Zeit- und Frequenzoffset sowie Phasenvariationen, wobei die horizontale Achse eine Geschwindigkeit in Meter pro Sekunde und die vertikale Achse eine Magnitude in Dezibel (dB) angibt;

Fig. 18b    2D-(FFT-)Spektrum für den Kreuzpfad des zweiten Radarmoduls, mit Korrekturen von Drift und Jitter sowie Zeit- und Frequenzoffset sowie Phasenvariationen, wobei die horizontale Achse eine Geschwindigkeit in Meter pro Sekunde und die vertikale Achse eine Magnitude in Dezibel (dB) angibt;

Fig. 19    Superpositions-Spektrum nach einer Addition der Spektren nach Figuren 18a, 18b für den Kreuzpfad, wobei die horizontale Achse eine Geschwindigkeit in Meter pro Sekunde und die vertikale Achse eine Magnitude in Dezibel (dB) angibt; und

Fig. 20a    Spektrum einer Primärantwort für das erste Radarmodul, wobei die horizontale Achse eine Geschwindigkeit in Meter pro Sekunde und die vertikale Achse eine Magnitude in Dezibel (dB) angibt;

Fig. 20b    Spektrum einer Primärantwort für das zweite Radarmodul, wobei die horizontale Achse eine Geschwindigkeit in Meter pro Sekunde und die vertikale Achse eine Magnitude in Dezibel (dB) angibt.

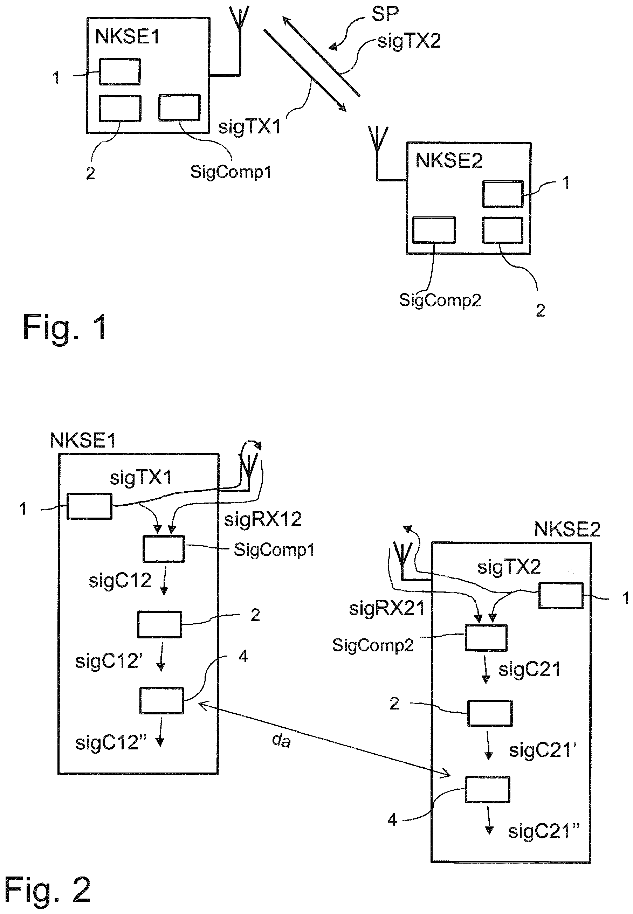

Wie aus Fig. 1 ersichtlich, kommunizieren zwei Sende-Empfangseinheiten NKSE1, NKSE2 über eine Funk-Schnittstelle miteinander. Dabei werden ein erstes bzw. ein zweites Signal sigTX1, sigTX2 gesendet. Die Sende-Empfangseinheiten NKSE1, NKSE2 weisen jeweils eine Signalquelle 1, eine Einheit zur Taktanpassung oder Vergleichssignalmodifikation 2 und eine Sendevergleichseinheit (SigComp1, SigComp2) auf. Die (nicht-kohärenten) Sende-Empfangseinheiten werden vorzugsweise durch Radarmodule gebildet. Somit können im Folgenden NKSE1 als ein erstes Radarmodul und NKSE2 als ein zweites Radarmodul angesehen werden.

Fig. 2 zeigt zusätzlich jeweils eine Einheit zur Phasenmodifikation 4. Zwischen den beiden Einheiten zur Phasenmodifikation 4 erfolgt ein Datenaustausch.

Im Folgenden wird die exakte mathematische Herleitung der Funktionsweise des Verfahrens II durchgeführt. In einer ersten nicht-kohärenten Sende-Empfangseinheit (NKSE1) wird ein erstes Signal (sigTX1) erzeugt und über einen Pfad (SP) gesendet, insbesondere ausgestrahlt. In einer weiteren, insbesondere zweiten nicht-kohärenten Sende-Empfangseinheit (NKSE2) wird ein zweites Signal (sigTX2) erzeugt und über den Pfad (SP) gesendet, insbesondere ausgestrahlt. Die Abstrahlung der Signale erfolgt hierbei möglichst gleichzeitig zumindest aber zeitlich so aufeinander abgestimmt, dass sich die beiden Signalformen vorzugsweise mindestens die Hälfte der Sendezeit überlappen. Die Signalquellen können komplett oder teilweise unabhängig sein.

Wie in der Nachrichtentechnik üblich, können die verwendeten Sendesignale (sigTX1, sigTX2) als eine Zerlegung in ein äquivalentes Basisbandsignal (bbTX1) und ein Trägersignal dargestellt werden.

Da das erfindungsgemäße System vorzugsweise zur Entfernungsmessung bzw. zur Abbildung verwendet werden soll, werden als Basisbandsignale vorzugsweise Signale mit sogenannten guten Korrelationseigenschaften verwendeten. Signale mit guten Korrelationseigenschaften sind beispielsweise breitbandige Pulse, Rauschsignale, pseudo-zufällige Pulsfolgen (PN Codes) wie etwa M-Sequenzen, Gold-Codes oder Barker Codes, Kasami Sequenzen, Huffman Sequenzen, Chirps, linear frequenzmodulierte Signale (FMCW), Chirp- oder FMCW-Sequenzen usw.. Derartige Signalformen sind in der Radartechnik und der Kommunikationstechnik (insbes. im Bereich CDMA) seit langem und vielfältig bekannt.

Das Sendesignal (sigTX1) der Sende-Empfangseinheit (NKSE1) kann wie folgt dargestellt werden:

$$ sigTX1(t) = \mathrm{Re}\left\{ bbTX1(t - T_{01}) \cdot e^{j\left(\omega_{c1}(t-T_{01}) + \phi TX1(t-T_{01})\right)} \right\} $$

Der Zeitoffset $T_{01}$ definiert den Sendezeitpunkt des Signals sigTX1; der Phasenterm $\phi TX1(t) = \varphi TX1 + \xi TX1(t)$ umfasst einen konstanten Phasenoffset und das Phasenrauschen des Trägersignals.

Die Kreisfrequenz $\omega_{c1}$ charakterisiert die Frequenz des Trägersignals von sigTX1.

In gleicher Art und Weise kann das Sendesignal (sigTX2) der Sende-Empfangseinheit (NKSE2) gebildet werden. Es gilt:

$$ sigTX2(t) = \mathrm{Re}\left\{ bbTX2(t - T_{02}) \cdot e^{j\left(\omega_{c2}(t-T_{02}) + \phi TX2(t-T_{02})\right)} \right\} $$

Die gesendeten Signale (sigTX1 und sigTX2) gelangen - auf direktem Weg oder an Objekten reflektiert - zur jeweils anderen Sende-Empfangsstation und werden dort empfangen und als Empfangssignale sigRX12 und sigRX21 weiterverarbeitet.

Das Empfangssignal, das an der zweiten nicht-kohärenten Sende-Empfangseinheit (NKSE2) empfangen wird, entspricht dem Sendesignal (sigTX1), wobei dieses jedoch in der Amplitude geändert und um die Laufzeit $\tau_{21}$ verzögert ist. Zur Vereinfachung der mathematischen Darstellung und ohne Beschränkung der allgemeinen Offenbarung sollen alle Signale im Folgenden als komplexwertige Signale dargestellt werden. Es gilt somit:

$$ sigRX21(t) = ARX21 \cdot bbTX1(t - T_{01} - \tau_{21}) \cdot e^{j\left(\omega_{c1}(t-T_{01}-\tau_{21}) + \phi TX1(t-T_{01}-\tau_{21})\right)} $$

Wird das Sendesignal (sigTX1) auf mehreren (eine Anzahl von I) unterschiedlich langen Übertragungswegen zur zweiten Sende-Empfangseinheit (NKSE2) übertragen, so kann das Empfangssignal als eine lineare Superposition von amplitudengewichteten und zeitverzögerten Signalen wie folgt dargestellt werden:

$$sigRX21(t) = \sum_{i=1}^{I} sigRX21i(t)$$

mit

$$sigRX21i(t) = ARX21i \cdot bbTX1(t - T_{01} - \tau_{21i}) \cdot e^{j(\omega_{c1}(t - T_{01} - \tau_{21i}) + \phi TX1(t - T_{01} - \tau_{21i}))}$$

Für das von der zweiten Sende-Empfangseinheit (NKSE2) zur ersten Sende-Empfangseinheit (NKSE1) übertragene Signal gilt entsprechend

$$sigRX12(t) = ARX12 \cdot bbTX2(t - T_{02} - \tau_{12}) \cdot e^{j(\omega_{c2}(t - T_{02} - \tau_{12}) + \phi TX2(t - T_{02} - \tau_{12}))}$$

bzw.

$$sigRX12(t) = \sum_{i=1}^{I} sigRX12i(t)$$

mit

$$sigRX12i(t) = ARX12i \cdot bbTX2(t - T_{02} - \tau_{12i}) \cdot e^{j(\omega_{c2}(t - T_{02} - \tau_{12i}) + \phi TX2(t - T_{02} - \tau_{12i}))}$$

Die Sende-Empfangseinheiten (NKSE1, NKSE2) seien so ausgeführt, dass sie Signalvergleichseinheiten SigComp1, SigComp2 umfassen, in denen das jeweilige Empfangssignal einer Sende-Empfangseinheiten mit ihrem Sendesignal verrechnet wird - d.h. in NKSE1 das Signal sigRX12 mit dem Signal sigTX1 und in NKSE2 das Signal sigRX21 mit dem Signal sigTX2. Die Signalvergleichseinheiten SigComp1, SigComp2 sind im Ausführungsbeispiel als Mischer Mix ausgeführt. D.h. hier wird in NKSE1 das Signal sigRX12 mit dem Signal sigTX1 gemischt und in NKSE2 das Signal sigRX21 mit dem Signal sigTX2. Es ist als solches allgemein bekannt, dass ein Mischvorgang systemtheoretisch als Multiplikation ausgedrückt werden kann bzw. ein Heruntermischen bei zwei komplexen Sinussignalen als Multiplikation eines der Signale mit dem konjugiert komplexen (* = Zeichen für Konjugation) des anderen Signals. Es gilt daher:

$$\begin{aligned} sigC12 &= sigRX12^* \cdot sigTX1 \\ &= ARX12 \cdot bbTX2^*(t - T_{02} - \tau_{12}) \cdot e^{-j(\omega_{c2}(t - T_{02} - \tau_{12}) + \phi TX2(t - T_{02} - \tau_{12}))} \cdot bbTX1(t - T_{01}) \cdot e^{j(\omega_{c1}(t - T_{01}) + \phi TX1(t - T_{01}))} \\ &= ARX12 \cdot bbTX2^*(t - T_{02} - \tau_{12}) \cdot bbTX1(t - T_{01}) \cdot e^{j(\omega_{c1}(t - T_{01}) + \phi TX1(t - T_{01}) - \omega_{c2}(t - T_{02} - \tau_{12}) - \phi TX2(t - T_{02} - \tau_{12}))} \end{aligned}$$

Eine andere vorteilhafte Art ein Vergleichssignal zu bilden besteht darin, dass NKSE1 das Signal sigRX12 nicht mit dem Signal sigTX1 mischt sondern nur mit dessen Träger. Also:

$$\begin{aligned} sigC12 &= sigRX12^* \cdot e^{j(\omega_{c1}(t - T_{01}) + \phi TX1(t - T_{01}))} \\ &= ARX12 \cdot bbTX2^*(t - T_{02} - \tau_{12}) \cdot e^{j(\omega_{c1}(t - T_{01}) + \phi TX1(t - T_{01}) - \omega_{c2}(t - T_{02} - \tau_{12}) - \phi TX2(t - T_{02} - \tau_{12}))} \end{aligned}$$

Für die Signale in der NKSE2 gilt entsprechend:

$$sigC21 = sigRX21^* \cdot sigTX2$$

$$= ARX21 \cdot bbTX1^* \left(t - T_{01} - \tau_{21}\right) \cdot e^{-j\left(\omega_{c1}\left(t-T_{01}-\tau_{21}\right)+\phi TX1\left(t-T_{01}-\tau_{21}\right)\right)} \cdot bbTX2\left(t - T_{02}\right) \cdot e^{j\left(\omega_{c2}\left(t-T_{02}\right)+\phi TX2\left(t-T_{02}\right)\right)}$$

$$= ARX21 \cdot bbTX1^* \left(t - T_{01} - \tau_{21}\right) \cdot bbTX2\left(t - T_{02}\right) \cdot e^{j\left(\omega_{c2}\left(t-T_{02}\right)+\phi TX2\left(t-T_{02}\right)-\omega_{c1}\left(t-T_{01}-\tau_{21}\right)-\phi TX1\left(t-T_{01}-\tau_{21}\right)\right)}$$

Oder in der alternativen Ausführungsform:

$$sigC21 = sigRX21^* \cdot e^{j\left(\omega_{c2}\left(t-T_{02}\right)+\phi TX2\left(t-T_{02}\right)\right)}$$

$$= ARX21 \cdot bbTX1^* \left(t - T_{01} - \tau_{21}\right) \cdot e^{j\left(\omega_{c2}\left(t-T_{02}\right)+\phi TX2\left(t-T_{02}\right)-\omega_{c1}\left(t-T_{01}-\tau_{21}\right)-\phi TX1\left(t-T_{01}-\tau_{21}\right)\right)}$$

Es wird nun davon ausgegangen, dass in NKSE Mittel vorgesehen sind, die dafür sorgen, dass die folgenden Bedingungen erfüllt sind:

$$T_{01} = T_{02} = T_0 \quad \text{und} \quad \omega_{c2} = \omega_{c1} = \omega_c$$

Wie diese Mittel vorzugsweise ausgestaltet sein können, wurde bereits oben erläutert bzw. wird weiter unten in einem Ausführungsbeispiel noch ausgeführt. Unter diesen Randbedingungen ergibt sich:

$$sigC12 = ARX12 \cdot bbTX2^* \left(t - T_0 - \tau_{12}\right) \cdot bbTX1\left(t - T_0\right) \cdot e^{j\left(\omega_c\left(t-T_0\right)+\phi TX1\left(t-T_0\right)-\omega_c\left(t-T_0-\tau_{12}\right)-\phi TX2\left(t-T_0-\tau_{12}\right)\right)}$$

$$= ARX12 \cdot bbTX2^* \left(t - T_0 - \tau_{12}\right) \cdot bbTX1\left(t - T_0\right) \cdot e^{j\left(\omega_c\tau_{12}+\phi TX1\left(t-T_0\right)-\phi TX2\left(t-T_0-\tau_{12}\right)\right)}$$

$$sigC21 = ARX21 \cdot bbTX1^* \left(t - T_0 - \tau_{21}\right) \cdot bbTX2\left(t - T_0\right) \cdot e^{j\left(\omega_c\left(t-T_0\right)+\phi TX2\left(t-T_0\right)-\omega_c\left(t-T_0-\tau_{21}\right)-\phi TX1\left(t-T_0-\tau_{21}\right)\right)}$$

$$= ARX21 \cdot bbTX1^* \left(t - T_0 - \tau_{21}\right) \cdot bbTX2\left(t - T_0\right) \cdot e^{j\left(\omega_c\tau_{21}+\phi TX2\left(t-T_0\right)-\phi TX1\left(t-T_0-\tau_{21}\right)\right)}$$

Geht man von einem reziprokem Übertragungskanal aus so gilt ferner: $\tau_{21} = \tau_{12} = \tau$ Im nächsten Schritt wird mit einer Datenkommunikation dafür gesorgt, dass beide Vergleichssignale zu einer gemeinsamen Auswerteeinheit übertragen werden und dort zur Auswertung beide vorliegen. Die gemeinsame Auswerteeinheit kann NKSE1, NKSE2 oder eine andere Auswerteeinheit sein.

Nun werden in einem weiteren Verarbeitungsschritt die Phasen der beiden Vergleichssignale addiert. Betrachtet man hier nur die Trägerphasen mit dem Phasenrauschanteil, da nur in diesem Anteil unbekannte Phasenbeiträge vorhanden sind und addiert man die beiden Trägerphasenterme so ergibt sich:

$$\Delta\phi = \left(\omega_c\tau + \phi TX1\left(t - T_0\right) - \phi TX2\left(t - T_0 - \tau\right)\right) + \left(\omega_c\tau_{21} + \phi TX2\left(t - T_0\right) - \phi TX1\left(t - T_0 - \tau_{21}\right)\right)$$

$$= 2\omega_c\tau + \phi TX1\left(t - T_0\right) - \phi TX1\left(t - T_0 - \tau\right) + \phi TX2\left(t - T_0\right) - \phi TX2\left(t - T_0 - \tau\right)$$

Berücksichtigt man, dass die Laufzeit $\tau$ wegen der großen Ausbreitungsgeschwindigkeit von elektromagnetischen Wellen in der Regel sehr klein ist und dass die maßgeblichen Phasenrauschanteile bei einem Oszillator entsprechend der bekannten Zusammenhänge von Oszillator-Phasenrauschen typischerweise mit zunehmenden Abstand vom Träger stark abnehmen und $\phi TX1$ bzw. $\phi TX2$ demzufolge ein ausgeprägtes Tiefpass-Verhalten aufweisen und zwar ein Tiefpassverhalten mit einer Grenzfrequenz, die üblicherweise deutlich kleiner als $1/\tau$ ist, so folgt:

$$\delta\phi1(t) = \phi TX1\left(t - T_0\right) - \phi TX1\left(t - T_0 - \tau\right)$$

mit $\delta\phi1(t) << \phi TX1(t)$

$$\delta\phi 2 = \phi TX2\left(t - T_0\right) - \phi TX2\left(t - T_0 - \tau\right)$$

mit $\delta\phi 2(t) << \phi TX2(t)$

Die vorgeschlagene Verarbeitung, dass bei einem der Vergleichssignale die Phase des jeweils anderen Vergleichssignals aufaddiert wird, führt also dazu, dass die Störungen durch Phasenrauschen ganz erheblich reduziert werden. Diese Phasenrauschreduktion führt zu einer besseren Detektierbarkeit von Zielen, zu einer größerer Messreichweite und einer verbesserten Messgenauigkeit.

Abhängig von der gewählten Mischer-Topologie, ob z.B. ein Gleichlage- oder ein Kehrlage-Mischer verwendet wird, ist es möglich, dass die oben dargestellten Phasenterme andere Vorzeichen aufweisen. Je nach Vorzeichen ist die bevorzugte Verknüpfung der Phasenterme nicht zwangsläufig eine Addition sondern ggf. auch eine Subtraktion. Entscheidend ist, dass die Verknüpfung zu einer Reduktion der Phasenrauschterme führt und der laufzeitabhängige Phasenterm, d.h. ein Ausdruck der den Term $\omega_c\tau$ umfasst, erhalten bleibt. Es ist ferner allgemein bekannt, dass für den Fall, dass die Phasenwerte durch komplexe Zahlen repräsentiert werden, die komplexen Zahlen miteinander multipliziert, dividiert oder mit dem konjugiert komplexen der jeweils anderen Zahl multipliziert werden, um die Summe oder die Differenz der Phasen zu bilden.

Eine mögliche bevorzugte Variante zur Reduktion der Phasenrauschanteile soll im Folgenden beschrieben werden. In vielen Fällen ist es günstig, dass in der ersten und zweiten nicht-kohärenten Sende-Empfangseinheit (NKSE1, NKSE1) gleichartige Basisbandsignale erzeugt werden, also dass gilt:

$$bbTX1 = bbTX2 = bbTX .$$

In einem zumindest näherungsweise reziprokem Funkkanal ist ferner davon auszugehen, dass gilt:

$$ARX12 = ARX21 = ARX .$$

Unter diesen Randbedingungen ergibt sich:

$$sigC12 = ARX \cdot bbTX^*\left(t - T_0 - \tau_{12}\right) \cdot bbTX\left(t - T_0\right) \cdot e^{j\left(\omega_c\tau + \phi TX1(t - T_0) - \phi TX2(t - T_0 - \tau)\right)}$$

$$sigC21 = ARX \cdot bbTX^*\left(t - T_0 - \tau_{21}\right) \cdot bbTX\left(t - T_0\right) \cdot e^{j\left(\omega_c\tau + \phi TX2(t - T_0) - \phi TX1(t - T_0 - \tau)\right)}$$

Wie leicht zu erkennen ist, sind die beiden Signale bis auf ihre Phasenterme identisch.

Leicht unterschiedliche Amplituden der Signale sigC12 und sigC21 können allerdings trotz eines reziproken Funkkanals aufgrund von unterschiedlichen Eigenschaften der elektronischen Komponenten wie etwa von Mischern oder Verstärkern etc. auftreten. Sofern die Amplituden der Signale sigC12 und sigC21 unterschiedlich sind, müssen die Signale bei der hier beschriebenen bevorzugten Variante zunächst auf die gleiche Amplitude normiert werden.

Auch können bei dem Vorgang zur Bildung der Signale sigC12 und sigC21 zusätzliche systematische Phasenoffsets entstehen. Sofern diese Phasenoffsets der Signale sigC12 und sigC21 unterschiedlich sind, müssen diese Phasenoffsets bei der hier beschriebenen bevorzugten Variante zunächst kompensiert werden.

Für einen bestimmten Zeitpunkt t, können die Signale sigC12 und sigC21 als komplexe Zeiger aufgefasst werden. Durch eine komplexe Addition der Zeiger heben sich die Vektorkomponenten der Phasenterme mit unterschiedlichem Vorzeichen in der gleichen Art und Weise auf, wie sie oben bei der Addition der Phasenterme beschrieben wurde. Folglich wird als eine mögliche bevorzugte Variante zur Reduktion der Phasenrauschanteile vorgeschlagen, die komplexen Signale sigC12 und sigC21 zu addieren, also ein Signal wie folgt zu bilden:

$$sigCC = sigC12 + sigC21$$

Das Signal sigCC weist dann ein signifikant geringeres Phasenrauschen auf als das Signal sigC12 bzw. sigC21 und das Signal sigCC wird dann weiter zum Zweck der Entfernungsmessung, Winkelmessung oder zur Bildgebung verwendet.

Wichtig ist aber, dass vor der Addition der Signale die zuvor beschriebenen systematischen Abweichungen von Amplitude und Phasen, die unterschiedliche Trägerfrequenzen und Sendezeitpunkte verursachen, kompensiert wurden.

Es müssen natürlich nicht alle Werte von sigC12 und sigC21 und auch nicht unbedingt die Signale sigC12 und sigC21 selber addiert werden. Es soll aber zumindest ein komplexer Wert aus einem ersten der beiden Vergleichssignale oder aus einem Signal, das aus diesem ersten Vergleichssignal abgeleitet wurde, dazu verwendet werden, zumindest einen komplexen Wert des zweiten der beiden Vergleichssignale oder einen Wert eines Signals, das aus diesem zweiten Vergleichssignal abgeleitet wurde, anzupassen und so zumindest einen Wert eines Signals (sigCC) zu bilden, wobei die Anpassung derart geschieht, dass durch eine mathematische Operation die vektorielle Summe oder die Differenz von zumindest zwei aus sigC12 und sigC21 abgeleiteten komplexen Werten gebildet wird oder die Summe oder die Differenz der Phasen dieser komplexen Werte gebildet wird.

Es sei hier darauf hingewiesen, dass die vorgeschlagenen Mischvorgänge nur eine mögliche Ausgestaltung darstellen und dass die Kompensation der Phasenrauschanteile auch durch alternative Methoden realisiert werden könnte. So könnten etwa alle Hochfrequenzsignale schon vor dem Mischen digitalisiert, d.h. mit einen Analog-zu-Digital-Konverter abgetastet, werden und alle weiteren Operation könnten rechnerisch bzw. digital zum Beispiel in einem Prozessor oder FPGA (field-programmable gate array) erfolgen.

Grundsätzlich können die gesendeten Signale sigTX1 und SigTX2 FMCW moduliert sein. Vorzugsweise werden dabei (vor der mathematischen Operation) die Spektren der Vergleichssignale auf den höchsten Wert normalisiert werden.

Im Folgenden wird eine spezielle Ausgestaltung des Verfahrens II mit FMCW Signalen und mehreren, aufeinanderfolgende N Rampen beschrieben. Dabei senden die NKSE mehrere N Signale mit linear ansteigender oder abfallender Frequenz, im Folgenden als Frequenzrampen bezeichnet. Aus den empfangenen Signalen werden dann in den NKSE die Vergleichssignale erzeugt und zur weiteren Verarbeitung zwischengespeichert. Es werden beispielhaft steigende und fallende Rampen verwendet, da hiermit eine vorzeichenrichtige Bestimmung der Relativgeschwindigkeit gelingt.

Zunächst werden einzelne Spektrogramme der Beatsignale sigC12 und sigC21 für jeden Empfangskanal für jede Rampe erstellt. Diese Spektrogramme werden in Amplitudendarstellung ohne Phaseninformation für alle N aufeinander folgenden Rampen nebeneinander gestellt. Dies ist in Fig. 4 für die steigenden Rampen dargestellt, in welcher zwei Maxima erscheinen, da keine IQ Mischung durchgeführt wurde, sondern ein reellwertiges Abtastsignal vorliegt. Bei Verwendung in Primärradaren muss für diesen Schritt vorab der mindestens eine Reflektor im Erfassungsbereich identifiziert werden und wie zuvor beschrieben dargestellt werden.

Nun wird das Frequenzband, in dem das Beatsignal zu erwarten ist (durch eine grobe Vorsynchronisation sichergestellt) großzügig ausgeschnitten. Danach wird jeweils das Spektrogramm der ersten N/2 Rampen mit dem der zweiten N/2 Rampen entlang der Frequenzachse korreliert (Schritt 1). Das dabei gefundene Maximum gibt den relativen Zeitdrift der beiden NKSEs wieder (hierbei kann von einer linearen Funktion ausgegangen werden). Bei Empfang der Signale über eine oder mehrere Reflektionen kann beispielhaft auch die Identifikation der Ziele über die gegensätzliche Drift auf beiden Seiten erfolgen.

Alternativ kann eine Bestimmung des Frequenzoffsets insbesondere bei Primärradaren auch über ein gemeinsames Busssystem erfolgen, indem die Systeme ihre Messsignale oder weitergehende Synchronisationssignale über die Kabel eines Bussystems austauschen. Das Bussystem ist dabei insbeondere ein CAN, FlexRay, Most, Gigabyte Ethernetsystem, USB, Firewire oder TTP system.

Danach werden alle Rampen im Spektrogramm um diesen Drift korrigiert, indem man beispielsweise mit einem komplexen Korrektursignal mit gegenläufigem Frequenzversatz in der Einheit zur Taktanpassung oder Vergleichssignalmodifikation 2 multipliziert. Die so erhaltenen Spektrogramme der verschiedenen Rampen werden (inkohärent) addiert und im Ergebnis der Überlagerung wird das Maximum gesucht, welches dem Zeitversatz (Offsetfehler) entspricht. Bei Primärradar kann für die Auswahl der Peaks die im vorherigen Schritt erfolgte Identifizierung der zueinander gehörenden Peaks verwendet werden.

Alternativ kann eine Bestimmung des Zeitoffsets auch über ein gemeinsames Bussystem erfolgen, insbesondere, indem entweder die Messdaten oder geeignete Korrelationssequenzen übertragen werden.

Die auf diese Weise ermittelten Parameter relativer Zeitversatz und relative Zeitdrift (=aktueller Frequenzversatz) sind über die komplette Sequenz von N Rampen gemittelt. Dieses Ergebnis enthält einen großen Teil der Uhrenabweichung. Zusätzlich ist nun für jede Rampe und jede Station bekannt, an welcher Stelle im Spektrogramm jeweils die Energie des einfallenden Signals zu erwarten ist.

Die ursprünglich aufgezeichneten lokalen Mischsignale sigC12 und sigC21 werden nun zunächst um ganzzahlige Werte Tint (Darstellung des Zeitversatzes zwischen den beiden Stationen als $\Delta T=|T01-T02|=Tint+Tfrac$) verschoben, um eine einheitliche Zeitbasis zu erhalten. Durch die gemeinsame genaue Zeitbasis ist das Phasenrauschen stärker korreliert. Der verbleibende, geringe Zeitfehler Tfrac kann nun, etwa durch Anwendung eines Fractional-Delay-Filters, kompensiert werden. Die so verschobenen Signale werden nun um die abweichende Rampensteilheit korrigiert, die aufgrund des Frequenzversatzes Δω = ω1-ω2 der beiden Lokaloszillatoren entsteht, indem man mit einem normierten komplexen Korrektursignal faltet bzw. spektral multipliziert, was den Frequenzverlauf in die entgegengesetzte Richtung abbildet.

In diesen nachgeschärften Mischsignalen wird nun nach einer FFT des Beatsignals zur Kanalimpulsantwort jeweils ein Peak gesucht. Bei Sekundärradar nimmt man bevorzugt den stärksten Peak oder alternativ den ersten Peak, bei Primärradar muss man einen auf beiden Seiten gleichermaßen enthaltenen Peak wählen. Für jede Rampe an beiden Stationen ergibt sich so ein Maximum bei dem geschätzten Abstand mit der dazugehörenden Phasenlage. Diese Werte stimmen für die Messung auf dem Hin- und Rückweg bei einem reziproken Kanal prinzipiell überein. Die verbleibenden Abweichungen sind auf verbleibende Frequenz- und Phasenunterschiede zwischen beiden Signalquellen 1 der NKSE, beispielsweise der Oszillatoren, denen Phasenrauschen als Ursache zu Grunde liegt, zurückzuführen. Der genaue Frequenzunterschied kann nun absolut bestimmt und somit korrigiert werden (der Phasenunterschied kann bis auf 180°-Mehrdeutigkeit (bei IQ Mischern 360°) bestimmt werden). Diese Mehrdeutigkeit wird behoben durch eine Beschränkung des Phasenverlaufs auf +/- 90° von Rampe zu Rampe, was auch als Unwrapping bezeichnet wird. Nach dieser präzisen Korrektur des verbleibenden Phasenfehlers unterscheiden sich die synthetischen Mischsignale beider Stationen nun kaum noch.

Nach dieser Vorverarbeitung wurden die charakteristischen, systematischen Fehler des Radarsystems vollständig korrigiert, weswegen die Phasenverschiebung der beiden Beatsignale nur noch um einen kleinen Betrag abweicht. An dieser Stelle ist zum einen eine präzise Synchronisation der Zeit- und Frequenzbasis erreicht und zum anderen kann das Phasenrauschen als additiver Beitrag betrachtet und durch Linearkombination behoben werden. Dies geschieht beispielsweise mittels 2D Fouriertransformation aller N Rampen an beiden NKSEs, worauf schließlich die, in der Amplitude normierten Beatsignale addiert werden. Unter Einbezug der Systemparameter (Abtastrate, Rampensteilheit, Trägerfrequenz,...) stellt das Maximum des Ergebnisses dieser Linearkombination den Schätzwert für Abstand und Geschwindigkeit dar.

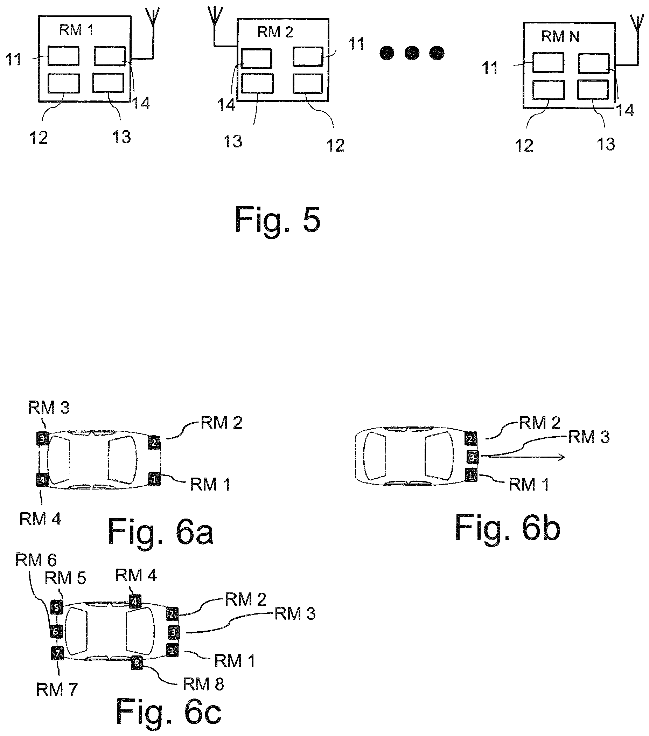

Fig. 5 zeigt schematisch eine Anordnung einer Vielzahl von Radarmodulen RM 1, RM 2, ... RM N, die jeweils eine Einrichtung zur Frequenzerzeugung (HF-Generator) 11, eine Einrichtung 12 zur Frequenzkonversion sowie eine (optionale) Einrichtung 13 zur Taktgenerierung und eine (optionale) Einrichtung 14 zur AD-Wandlung aufweisen.

Fig. 6 zeigt Beispiele, wie die schematisch in Fig. 1 dargestellten Radarmodule an einem Kraftfahrzeug (PKW) angeordnet werden können. In Fig. 6a sind an dem Kraftfahrzeug vier Radarmodule (vorne links, vorne rechts, hinten links und hinten rechts) angeordnet. Dadurch kann besonders vorteilhaft eine Umfelderfassung (im vorliegenden Fall mit vier Sensoren) erfolgen. In Fig. 6b sind drei Radarmodule vorne (in diesem Fall keine hinten) angeordnet, nämlich vorne links, vorne mittig und vorne rechts. Dadurch kann besonders vorteilhaft eine Umfelderfassung in Fahrtrichtung (im vorliegenden Fall mit drei Sensoren) erfolgen. In Fig. 6c kann ein besonders umfangreiche Umfelderfassung, im vorliegenden Fall mit acht Radarmodulen erfolgen (vorne links, vorne Mitte, vorne rechts, hinten links, hinten Mitte, hinten rechts und jeweils ein Radarmodul an den beiden Seiten) durchgeführt werden.

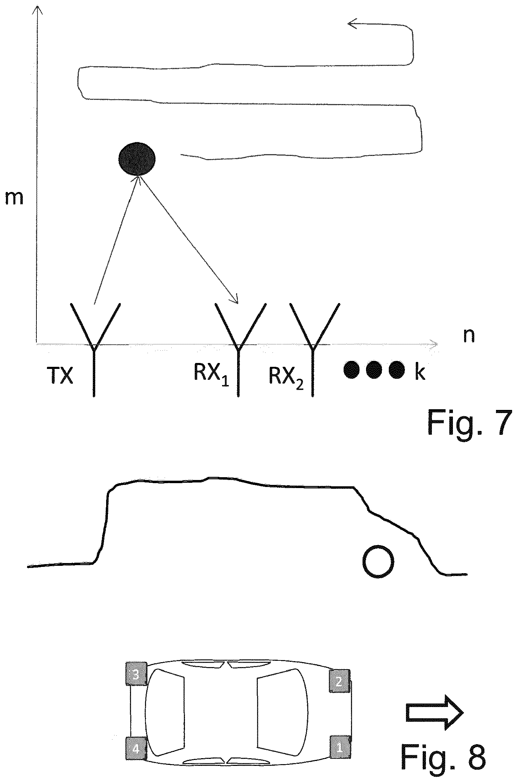

Unter Verweis auf Fig. 7 wird im Nachfolgenden eine Ausführungsform für eine holographische Auswertung erläutert. Für den vorliegenden Anwendungsfall kann die holographische Berechnung wie folgt ausgeführt sein.

Ein zu berechnender Raum kann über einzelne Raumpunkte dargestellt werden. Die Anordnung der Sende- und Empfangsantennen im zu berechnenden Raum bzw. relativ zum zu berechnenden Raum ist (üblicherweise) bekannt. Für jeden Raumpunkt kann ein synthetisches Signal (Amplitude, Phase, Frequenz) berechnet werden, das sich für einen Ausbreitungspfad (von einer angenommenen Sendeantenne a zu einer angenommenen Empfangsantenne b) ergibt. Dieses Signal kann dann mit realen Messdaten für diesen Sendepfad korreliert werden und das komplexe Korrelationsergebnis kann für diesen Raumpunkt festgehalten werden. Dieses Verfahren kann für alle k Ausbreitungswege für einen Raumpunkt wiederholt werden und jeweils (komplex) zum Ergebnis der vorherigen Berechnung dazu addiert werden. Ein Betragswert dieser Summe stellt dann eine Belegungswahrscheinlichkeit für den Raumpunkt dar. Dieses Verfahren kann über alle n, m Raumpunkte wiederholt werden und somit kann das Radarbild generiert werden.

Insbesondere bei der Verwendung von FMCW-Signalen kann das Holographie-Verfahren wie folgt durchgeführt werden:

Zunächst kann für jeden Kanal ein Beat-Spektrum berechnet werden. Für jeden Raumpunkt kann eine Signalhypothese bezüglich der Phasenlage für jede Sendesignal-Empfangssignal-Kombination so aufgestellt werden, dass diese mit einer erwarteten Phasenverschiebung auf diesem Ausbreitungspfad übereinstimmt (von einer angenommenen Sendeantenne a zu einer angenommenen Empfangsantenne b). Eine erwartete Phasenlage kann mit einer Startfrequenz $f_u$

$$\varphi_H = \exp\left(j\,\frac{2\pi d f_u}{c}\right)$$

und einer Signalpfadlänge d eines FMCW-Systems gemäß  zusammenhängen. Diese Signalhypothese kann dann mit realen Messdaten (ein genauer Amplituden- und Phasenwert kann aus dem Beat-Spektrum durch Interpolation gewonnen werden) für diesen Sendepfad (komplex konjugiert) multipliziert und das (komplexe) Zwischenergebnis für diesen Raumpunkt festgehalten werden. Diese Prozedur kann für alle k Ausbreitungswege für den Raumpunkt wiederholt und jeweils (komplex) zum Ergebnis der vorherigen Berechnung dazu addiert werden. Ein Betragswert dieser Summe stellt dann die Belegungswahrscheinlichkeit für den Raumpunkt dar. Dieses Verfahren kann für alle n, m Raumpunkte (in den beiden räumlichen Dimensionen) wiederholt und somit ein Radarbild generiert werden.

Besonders bevorzugt kann die holographische Berechnung auch für die Kalibration verwendet werden. Hier kann, insbesondere iterativ, derjenige Korrekturvektor ermittelt werden, der ein möglichst fokussiertes Ziel darstellt. Bei einer Kalibration von Antennenarrays wird (idealerweise) ein Punktziel im Fernfeld verwendet, das sich bei verteilten Radarmodulen, gemäß der obigen Näherungsformel, sehr weit von der Anordnung entfernt befindet. Aufgrund dessen wird das benötigte hohe Signal-zu-Rauschverhältnis nicht erreicht. Außerdem ist in diesem Fall die Vermessung der genauen Position des Kalibrationsobjekts schwer möglich und es besteht ein großer Platzbedarf für die Anordnung. Auch die Wahl einer passenden Umgebung ohne zusätzlich reflektierende Objekte und mit wenig Clutter ist vergleichsweise aufwändig. Vorzugsweise wird zur Kalibration (anstelle eines Objekts im Fernfeld) die Verwendung eines weitgehend idealen Punktziels an bekannter Position (z.B. ein Metallzylinder oder eine Metallkugel) im Nahfeld verwendet. Nach einer Bestimmung der genauen Position der Radaranordnung und des Ziels können insbesondere die Amplituden angeglichen und Phasendifferenzen (gemäß dem obigen holographischen Ansatz) korrigiert werden.

Die holographischen Verfahren lassen sich auch auf der Geschwindigkeits- und Beschleunigungsebene durchführen. Somit kann für jeden Bildpunkt (holographisch) der Geschwindigkeits- und Beschleunigungsvektor bestimmt werden. Geeignete Verfahren zur Geschwindigkeits- und Beschleunigungs-Holographie werden beispielsweise in DE 10 2009 030 076 beschrieben.

Unter Verweis auf Fig. 8 wird im Nachfolgenden eine erfindungsgemäße SAR-Bildgebung illustriert. In der SAR-Bildgebung können entlang einer gewissen Bewegungsstrecke Radarmessungen durchgeführt und aufgezeichnet werden. Diese können dann mathematisch so kombiniert werden, als ob sie von einem Antennenarray mit Elementen an jedem Ort, an dem eine Messung aufgenommen wurde, kombiniert wurden. Im Stand der Technik wurde dafür ein Radar verwendet und die synthetische Apertur über die gesamte Bewegungslänge erzeugt. Durch die Verwendung von zwei Radaren, deren Signale kohärent zueinander sind, können die Radardaten beider Sensoren und die zusätzlichen Wege zwischen den Radaren genutzt werden und ein für die Ausleuchtung benötigter Verfahrensweg wird geringer. Vorteilhafterweise werden daher die Radarsysteme, deren Signale mittels Postprocessing so korrigiert werden, als ob sie von einem kohärenten Radar erzeugt wurden, in einer großen Apertur aufgespannt. Dann können die Radarsignale beider Radarmodule (ein direkter Pfad und ein Kreuzpfad bzw. indirekter Pfad) gemeinsam in einem SAR-Algorithmus verwendet werden.

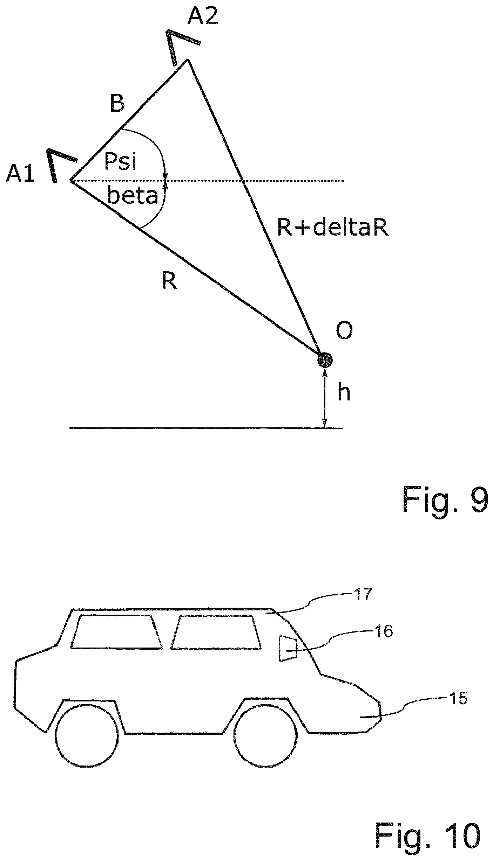

Fig. 9 zeigt eine schematische Skizze eines interferometrischen SAR (SAR= Synthetic Aperture Radar). Fig. 10 zeigt ein schematisches Fahrzeug mit einer beispielhaften Sensoranordnung (Anordnung von Modulen).

Die Vermessung einer Höhe von Objekten stellt insbesondere im Bereich des autonomen Fahrens eine wesentliche Hürde dar, da aktuell verwendete Umfeldsensoriken (üblicherweise) nur eine Schätzung des Abstands, der Geschwindigkeit und des Azimut-Winkels eines Ziels in der Fahrzeugumgebung ermöglicht. Aus M. A. Richards, "A Beginner's Guide to Interferometric SAR Concepts and Signal Processing", IEEE Aerospace and Electronic Systems Magazine, Vol. 22, Nr. 9, Seiten 5-29, 2007, ist bekannt, dass ein System, das über mehrere, räumlich versetzte Empfangsantennen verfügt, zur Messung der Höhe verwendet werden kann. Die Antennen des Systems sind in diesem Fall schräg nach unten gerichtet, wobei eine kombinierte Richtcharakteristik, die sowohl nach vorne als auch nach unten strahlt (situationsbedingt) auch von Vorteil sein kann. Hierbei ist die erreichbare Genauigkeit maßgeblich durch einen Höhenunterschied der Empfangsantennen eingeschränkt. Eine vergleichsweise hohe Genauigkeit ist insbesondere zur Unterscheidung von Objekten, wie Bordsteinkanten, Zäunen, Leitpfosten, Verkehrsschildern, Schachtdeckeln oder von Müll (hier stellen beispielsweise Getränkedosen oder kleine Verpackungen keine wesentlichen Hindernisse auf der Fahrbahn dar), die sich auf der Fahrbahn befinden, aber auch zur Erkennung und Unterscheidung von Menschen oder Tieren im Straßenverkehr, vorteilhaft. Weiterhin ist eine Höhenerkennung für automatische Einparkvorgänge von (maßgeblicher) Bedeutung. Nach M. A. Richards, "A Beginner's Guide to Interferometric SAR Concepts and Signal Processing", IEEE Aerospace and Electronic Systems Magazine, Vol. 22, Nr. 9, Seiten 5-29, 2007, wird die Genauigkeit der Höhenmessung näherungsweise durch

$$|\delta h| \approx \frac{\cos(\psi)}{\sin(\psi + \beta)} \frac{R}{B} |\delta(\Delta R)|$$

bestimmt, wobei die beiden Winkel $\psi$ und $\beta$, sowie die Abstände $R$, $B$ und $\Delta R$ Figur 9 entnommen werden können. $\delta(\Delta R)$ stellt hierbei die Genauigkeit der Messung des Differenzabstands dar, welcher beispielsweise mit Hilfe eines Phasenvergleichs sehr genau ermittelt werden kann. Bei der vorliegenden Erfindung kann die Basislinie B wesentlich vergrößert werden, da weitere Empfangselemente (Module) beliebig (oder zumindest im Wesentlichen beliebig) am Fahrzeug positioniert werden können. Hiermit lässt sich beispielsweise durch die Platzierung eines Radarmoduls in einer Stoßstange und eines zweiten Radarmoduls auf dem Dach des Fahrzeugs eine Steigerung der Genauigkeit um den Faktor 10 (verglichen mit einem einzigen, kompakten Radarmodul mit mehreren Empfangselementen) erreichen. Beispielshafte Einbaupositionen sind in Fig. 10 illustriert, nämlich in einer Stoßstange 15, Seitenspiegeln 16 und/oder in einem Dach (Dachholm) 17.

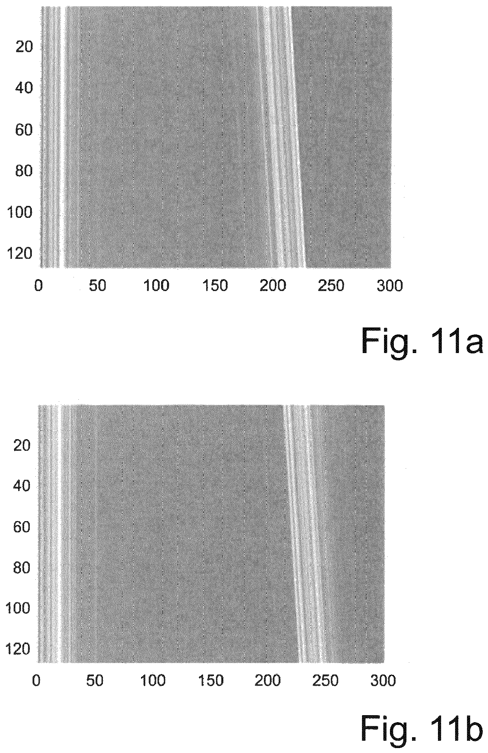

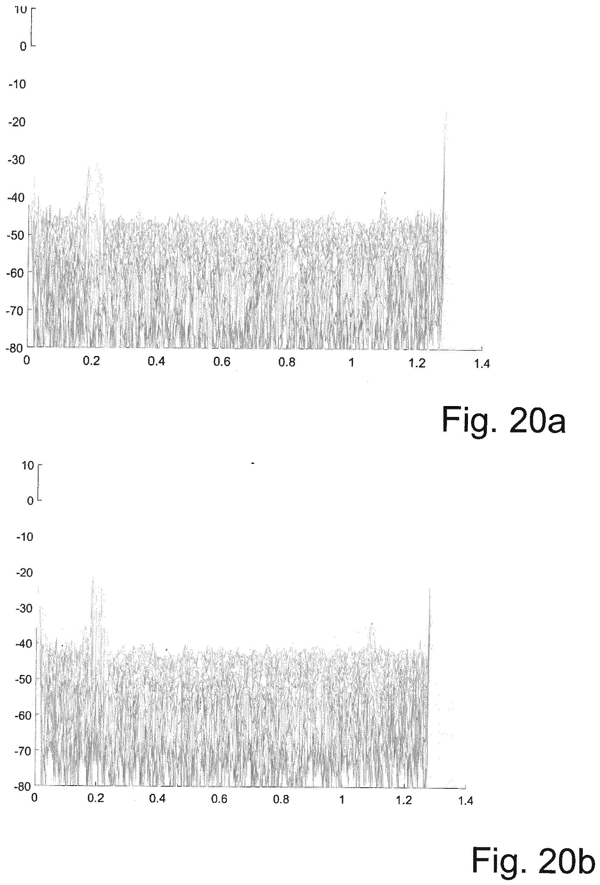

Anhand der Diagramme gemäß den Fig. 11a, 11b - 20a, 20b werden Verfahren zur Reduzierung von Störanteilen, insbesondere Phasenrauschen, erläutert. Diese Verfahren sollen auch als Weiterbildung des Verfahrens I oder des Verfahrens II als (optional) unabhängige Gegenstände der vorliegenden Erfindung beschrieben werden. In diesem Zusammenhang sind dann die weiteren Merkmale des Anspruches 1 (sowie der weiteren unabhängigen Ansprüche) ggf. nur optional.

Insoweit im Nachfolgenden von Modulen die Rede ist, kann es sich hierbei insbesondere um die (nicht-kohärenten) Sendeempfangseinheiten gemäß Verfahren I oder Verfahren II handeln. Die Module (Sende-Empfangseinheiten) müssen also nicht (zwingend) auf einem sich bewegenden Objekt (beispielsweise auf dem Kraftfahrzeug gemäß Fig. 8) angeordnet sein oder für eine derartige Anordnung konfiguriert sein. Dies ist jedoch möglich.

In Fig. 11a ist ein Spektrum eines ersten Radar-Moduls gezeigt. Konkret ist ein Verlauf von mehreren (hier beispielsweise 128) Rampen vorgegeben, falls diese für einen Übertragungskanal nebeneinander dargestellt werden. Es ist zu erkennen, dass ein Kreuzpfad zum einen von einem Frequenzoffset $\Delta f$ (hier als 350 kHz gewählt), jedoch auch von einer unbekannten Drift $T_d$ und Jitter $T_J$ dergestalt beeinflusst wird, dass sich eine Beatfrequenz über eine Signaldauer (also beispielsweise die Folge von 128 Rampen) ändert. Außerdem kann ggf. auch der unbekannte Zeitoffset zwischen den Modulen $T_{off,0}$ Einfluss nehmen. Dieser Offset entsteht durch die unterschiedlichen Startpunkte der Signalerzeugung in den Radar-Modulen. Dieser Offset ist ggf. selbst bei einer Vorsynchronisation über die Luftschnittstelle oder über eine Synchronisationsleitung nicht vollständig bekannt. Fig. 11a zeigt das Spektrum des ersten Radar-Moduls. Fig. 11b zeigt ein entsprechendes Spektrum eines zweiten Radar-Moduls.

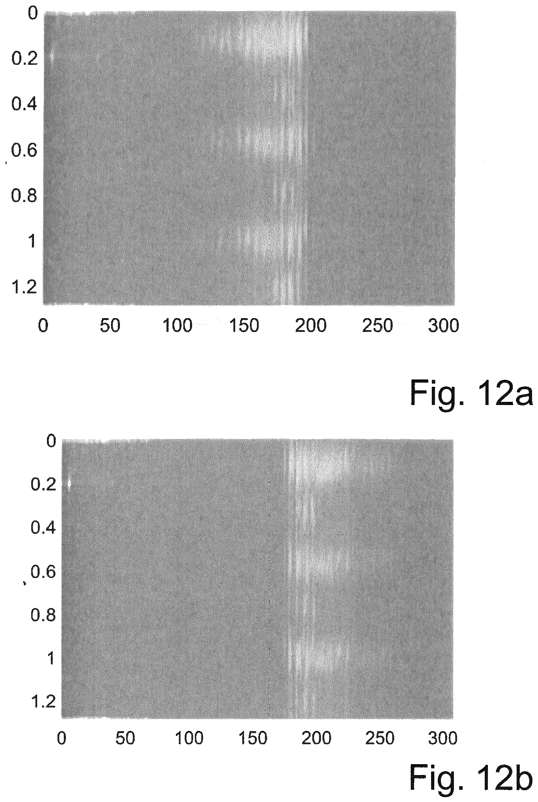

Wertet man (nur) eine Primär-Radarantwort aus, ergibt sich eine Darstellung gemäß Fig. 12a (für das erste Radar-Modul) und 12b (für das zweite Radar-Modul). Diese Darstellungen ergeben sich insbesondere aus einer 2D-FFT ohne Vorbearbeitung.

Zu erkennen sind stehende Ziele bei v=0 m/s sowie ein sich bewegendes Ziel mit einer konstanten Geschwindigkeit von 0,2 m/s in einem bestimmten Abstand. Eine Kreuzpfad-Antwort lässt sich so nicht (zumindest nicht besonders genau) auswerten, kann jedoch gemäß den nachfolgenden Ausführungen (Algorithmen) korrigiert werden. Für eine (vollständige) Auswertung kann noch ein Azimut-Winkel herangezogen werden.

Kreuzpfad-Signale der (beiden) Radar-Module nach einem Mischvorgang, unter Einfluss von (allen) Systemgrößen für einen Signalpfad, werden für erste Betrachtungen hinreichend genau beschrieben als (wobei der Übersicht halber auf eine Modellierung einer Mehrweg-Ausbreitung bzw. mehrerer Ziele zunächst verzichtet wird)

$$s_{anl}(t) = A_a e^{j2\pi(f_0((-1)^{a-1}(\tau+\tau_l)-T_{off,l})+\delta\phi_{0,l})} e^{j(\phi_{p,al}(t)+(-1)^{a-1}\phi_{an})} e^{-j2\pi t(\Delta f+\mu((-1)^{a-1}\tau-T_{off,l}))}. \qquad (1)$$

Prinzipiell besteht das Mischsignal also aus einer Amplitude $A_{a1}$ zwei Phasentermen

$$e^{j2\pi(f_0((-1)^{a-1}(\tau+\tau_l)-T_{off,l})+\delta\phi_{0,l})} e^{j(\phi_{p,al}(t)+(-1)^{a-1}\phi_{an})},$$

und einem Frequenzterm

$$e^{-j2\pi t(\Delta f+\mu((-1)^{a-1}\tau-T_{off,l}))}.$$

In obiger Gleichung (1) gilt:

| | |
|---|---|
| $\alpha$: | Nummer der Station (z.B. 1 oder 2) |
| $n$: | Nummer des Kanals (z. B. 1 bis 8) |
| $l$: | Nummer der Rampe (z. B. 1 bis 128) |
| $A_a$: | Signalamplitude |
| $f_0$: | Trägerfrequenz (z. B. etwa 78 GHz) |
| $\tau$: | Laufzeit Kreuzpfad |
| $\tau_l$: | Laufzeitänderung aufgrund der Bewegung eines Objekts |
| $T_{off,l}=T_{off,0}+T_{j,l}+l\cdot T_D$: | Timingoffset (z. B. aufgrund von Kabellänge, Jitter und/oder Drift) |
| $\delta\phi_{0,l}$: | Phasenverschiebung durch Trägerfrequenzdrift und/oder unbekannte andere Komponenten |

| | |
|---|---|
| $\phi_{p,al}(t)$: | Phasenrauschen (unkorreliert) |
| $\phi_{an}$: | Phasenverschiebung zwischen Stationen und Einzelkanälen |
| $\Delta f$: | Frequenzoffset (z. B. 350kHz) |
| $\mu$: | Sweep rate (z. B. 500GHz/s) |

Diese Laufzeitänderung (bei zumindest annähernd gleichförmiger Bewegung über die Messzeit) wird über eine Phasenänderung der Beatfrequenz detektiert, welche innerhalb der Messzeit als zumindest annähernd konstant angenommen werden kann.

Die Fouriertransformation einer Rampe ergibt das Beatsignal

$$S_{anl}(f) = \mathcal{F}\{s_{anl}(t)\} = A_a e^{j2\pi f_0\left((-1)^{a-1}(\tau+\tau_l)-T_{off,l}+\delta\phi_{0,l}\right)}e^{j(-1)^{a-1}\phi_{an}}$$
$$\cdot \mathcal{F}\{e^{j\phi_{p,al}(t)}\} * \delta\left(f - (\Delta f + \mu((-1)^{a-1}\tau - T_{off,l}))\right). \tag{2}$$

Nachdem diese Beschreibung grundsätzlich unabhängig von einer gewählten Fensterfunktion möglich ist, kann auf diese verzichtet werden. Das Phasenrauschen im Mischsignal einer Station hängt von der aktuellen Phasenlage beider Stationen ab und ergibt sich somit zu $\phi_{p,1l}(t)=\Psi_{p,1l}(t-T_{off,l})-\Psi_{p,2l}(t-\tau)$ und $\phi_{p',2l}(t)=\Psi_{p,1l}(t-\tau-T_{off,l}) - \Psi_{p,2l}(t)$. Für die Varianz des Phasenrauschens (Allan-Varianz) ist die Zeitdifferenz zwischen 2 Zeitpunkten entscheidend, weswegen die Ausprägung in beiden Stationen etwa gleich ist ($\phi_{p,1l}(t)\approx\phi_{p,2l}(t)$). Das Phasenrauschen der Lokaloszillatoren $\Psi_{p,1l}$ und $\Psi_{p,2l}$ ist (im Gegensatz zu einem Primärradar) nicht korreliert und kann die Phasenauswertung bzw. Signalkohärenz bzw. Geschwindigkeitsmessung (drastisch) verschlechtern.

Nachfolgend wird ein Algorithmus zur Auswertung des abgetasteten Signals (gemäß Gleichung (1)) angegeben: In einem ersten Schritt kann beispielsweise aus einer Hilbert-Transformation (die notwendig sein kann, wenn keine I/Q-Daten verfügbar sind) per FourierTransformation das jeweilige Spektrum berechnet werden.

Aus den Spektren in Fig. 11a, 11b wird ersichtlich, dass eine Beatfrequenz eines Kreuzpfads über die Zeit (annähernd) linear steigt, und außerdem Jitter von $\pm$ 1 Takt auftreten kann. Dies kann daran liegen, dass jedes Radar-Modul unterschiedliche Taktquellen benutzt. Dies kann in einer modifizierten Ausführung ausgeschlossen sein, was als

$$T_{off,l} = T_{off,0} + T_{J,l} + l \cdot T_D,$$

modelliert werden kann, wobei in diesem Rechenschritt eine Drift $T_D$, sowie der (aus Sicht der Signalverarbeitung) zufällig verteilte Jitter korrigiert werden können. Als eine Zufallsvariable dargestellt, ergibt sich für jede Rampe $l$ die Verteilung

$$p(T_{J,l}) \begin{cases} \alpha & f\ddot{u}r \ T_{J,l} = -J_0 \\ 1-2\alpha & f\ddot{u}r \ T_{J,l} = 0 \\ \alpha & f\ddot{u}r \ T_{J,l} = J_0 \end{cases},$$

die mit der Wahrscheinlichkeit $\alpha$ einen Sprung um $\pm$ 1 Takt zur Folge hat. Die Änderung der Beatfrequenz wird mit $J_0 \approx$ 12,5ns bezeichnet und hängt vom Systemtakt (hier z. B. $f_{clk}$ = 80MHz) und der sweep rate $\mu$ ab.

Eine Region um den Kreuzpfad kann als Intervall (großzügig) ausgeschnitten werden, so dass ein resultierendes Signal auch Informationen über (weit) entfernte Ziele (mit einer größeren Beatfrequenz beim zweiten Radar-Modul) enthält. Die Gleichung (2) beschreibt in diesem Fall alle relevanten Signalanteile.

Wie man in Gleichung (2) erkennen kann, ist eine Beatfrequenz für ein Ziel in allen Kanälen gleich (eine Antennenposition soll hier nur leicht variieren).

Absolut-Werte der Gleichung (2) können für jeden Kanal in beiden Radar-Modulen addiert werden, wie folgt:

$$S_{al}(f) = \sum_n |S_{anl}(f)|.$$

Es resultiert dann ein Signal mit relativ hohem SNR (Signal-to-Noise Ratio), das durch

$$S_{al}(f) = B_a \left| \mathcal{F}\{e^{j\phi_{p,al}(t)}\} * \delta(f - (\Delta f + \mu((-1)^{a-1}\tau - T_{off,l}))) \right|$$

beschrieben werden kann, wobei $B_\alpha$ die Summe der Amplituden der Einzelkanäle darstellt. Bei dem betrachteten System (mit relativ geringem Phasenrauschen) verändert sich die Beatfrequenz während einer Rampe durch diesen Effekt kaum, was die Näherung

$$S_{al}(f) \approx B_a \delta(f - (\Delta f + \mu((-1)^{a-1}\tau - T_{off,l}))) \tag{3}$$

erlaubt. In Gleichung (3) ist zu erkennen, dass durch den Frequenzoffset $\Delta f$ und den Timingoffset $T_{off,l}$ eine Verschiebung der Beatfrequenz in gleicher Richtung auftritt, durch die Signallaufzeit jedoch eine Verschiebung mit entgegengesetzter Orientierung.

Eine Faltung der Signale $S_1(f)$ und $S_2(f)$ der beiden Stationen kann berechnet werden, um die Signallaufzeit $\tau$ zu eliminieren. Das resultierende Signal

$$H(f) = S_{1l}(f) * S_{2l}(f) = \delta(f - 2(\Delta f - \mu T_{off,l}))$$

enthält ein deutliches Maximum bei der Frequenz bei $2(\Delta f - \mu T_{off,l})$. Da die Faltung sämtliche Ziele mit einbezieht, funktioniert diese Operation unabhängig vom gemessenen Szenario. Das SNR muss in der betrachteten Messung nur insgesamt ausreichend hoch sein. Für jede Einzelrampe kann nun das Maximum bestimmt werden, das als Folge

$$b_l = 2(\Delta f - \mu T_{off,l}) = 2(\Delta f - \mu(T_{off,0} + T_{J,l} + l \cdot T_D))$$

aufgefasst werden kann.

Um alle Anteile zu entfernen, welche über der Zeit konstant sind, kann wird für $l = 1 ... N - 1$ die differentielle Folge

$$D_l = \frac{(b_l - b_{l+1})}{2} = \frac{2\mu\left(T_{J,l} + l \cdot T_D - (T_{J,l+1} + (l+1) \cdot T_D)\right)}{2} = \mu(T_{J,l} - T_{J,l+1} - T_D)$$

Berechnet werden, wobei $N = 128$ in diesem Fall ein Beispiel für die Gesamtanzahl der gesendeten Rampen ist.

$D_l$ kann nun in drei Teilfolgen unterteilt werden, die mit $c_{1l}$, $c_{2l}$ und $c_{3l}$ bezeichnet werden und der Reihe nach zu den Sprüngen um 0, $J_0$, und $-J_0$ passen.

Eine Sprunghöhe durch Jitter kann durch Erwartungswertbildung

$$\hat{J}_0 = (E\{c_{1l}\} + E\{c_{2l}\} + E\{c_{3l}\})/3$$

bestimmt werden.

Ein Drift kann nun ebenfalls durch Erwartungswertbildung

$$\hat{T}_D = (E\{c_{2l}\} - E\{c_{3l}\})/2$$

geschätzt werden.

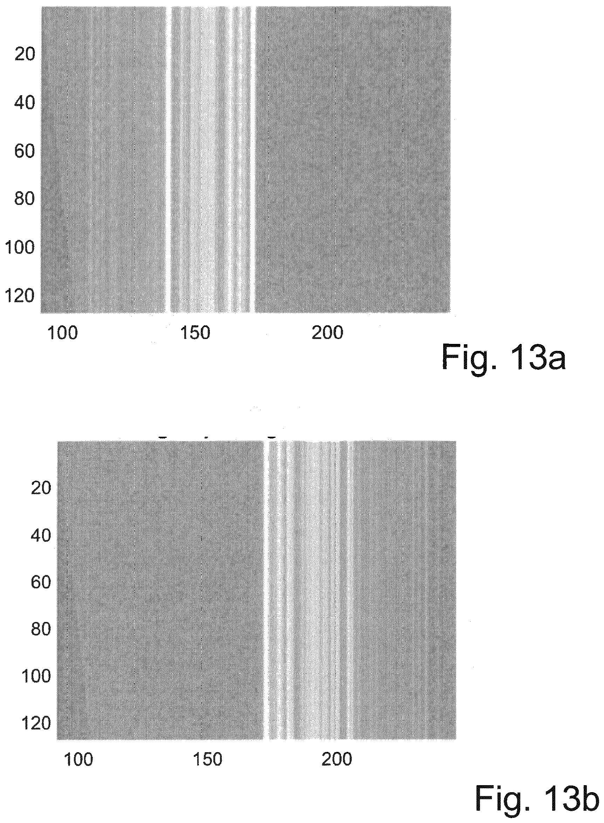

Mit den beiden Korrekturwerten $\hat{J}_0$ und $\hat{T}_D$ kann die Folge $D_l = \mu(T_{J,l} - T_{J,l+1} - T_D)$ vollständig beschrieben und ggf. eine Korrektur um Jitter und Drift durchgeführt werden. Figuren 13a, 13b zeigen Spektrogramme beider Module (Fig. 13 a für das erste Radar-Modul; Fig. 13b für das zweite Radar-Modul) nach der Korrektur von Drift und Jitter.

Ggf. kann bei der Verwendung eines gemeinsamen Triggers pro Modul ein System ohne Jitter (in der Größenordnung des Taktes) realisiert werden. In diesem Fall kann jedoch ein deutlich kleinerer Jitteranteil übrig bleiben, der in den anderen Verfahrensschritten kompensiert wird.

Eine Synchronisation, z.B. über einen CAN-Bus kann ggf. den Drift beider Module verhindern. Mit einer Synchronisation der Taktsignale und einem gemeinsamen Trigger ist eine Auswertung mit dem beschriebenen Verfahren auf einfache Art und Weise möglich, da kein Jitter mehr auftritt und der Drift (vernachlässigbar) gering ist.

Nachfolgende wird eine Korrektur von Laufzeit- und Frequenzoffset beschrieben.

Eine Laufzeit über ein Synchronisationskabel bzw. ein (voreingestellter) Frequenzoffset (zur Trennung von Primär- und Sekundärantwort) können zu einer (unbekannten) Verschiebung in der Beatfrequenz führen, welche bei beiden Stationen identisch ist. Ausgehend von Gleichung (3), nach Anwendung der in oben beschriebenen Korrekturen, ergibt sich die Amplitude des Beatsignals für beide Stationen zu

$$S_{al}(f) \approx B_a \delta(f - (\mu((-1)^{a-1}\tau + \Delta f - \mu T_{off,0}))) \,. \qquad (4)$$

Dieses Signal variiert nicht mehr von Chirp zu Chirp, also über die Rampennummer $l$, weswegen die Summation über $l$

$$S_a(f) = \sum_l |S_{al}(f)| = C_a \delta(f - (\mu((-1)^{a-1}\tau + \Delta f - \mu T_{off,0}))) \,.$$

zu starken Maxima führt. Diese sind von der Verteilung her gleich, liegen jedoch einmal links und einmal rechts von einer "virtuellen Mitte" $f_m$, die sich durch $f_m = \Delta f\text{-}T_{off,0}$ ergibt. Durch eine erneute Faltung der beiden Kanalantworten

$$H(f) = S_1(f) * S_2(f) = \delta(f - 2(\Delta f - \mu T_{off,l})))$$

lässt sich das Maximum von $H(f)$ bestimmen, welches sich als sehr genaue Schätzung $\hat{f}_m$ der virtuellen Mitte verwenden lässt. Eine vorhergehende Korrektur von Drift und Jitter ist an dieser Stelle vorteilhaft, da damit das gesamte SNR (deutlich) erhöht werden kann.

Wahlweise wird nun das Spektrum von einer der Stationen an dieser virtuellen Mitte gespiegelt, wonach die Amplituden der beiden Spektren an den gleichen Positionen erscheinen und nach einer Verschiebung des Schwerpunkts zu einer Beatfrequenz von 0 Hz (absolute Position der Maxima entspricht nun den eigentlichen Zielentfernungen) durch

$$S_{anl}(f) = A_a e^{j2\pi f_0\left((-1)^{a-1}(\tau+\tau_l) - \mu T_{off,l} + \delta\phi_{0,l}\right)} e^{j(-1)^{a-1}\phi_{an}} \cdot \mathcal{F}\left\{e^{j\phi_{p,al}(t)}\right\} * \delta(f - \mu\tau) \qquad (5)$$

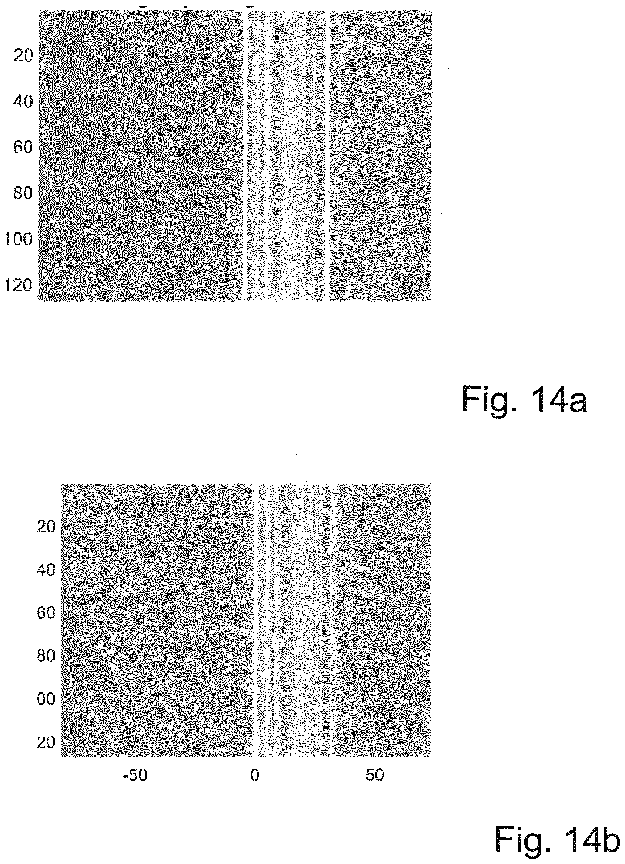

dargestellt werden können. Figuren 14a, 14b zeigen Spektrogramme beider Module nach Korrektur von Zeit- und Frequenzoffset (Fig. 14a für das erste Modul; Fig. 14b für das zweite Modul, beide Module befanden sich in geringem Abstand zu einander, weswegen ein gewisses Übersprechen als "Ziel" bei 0m erkennbar wird.).

Nachfolgend wird eine Korrektur einer Phasenvariation erläutert.

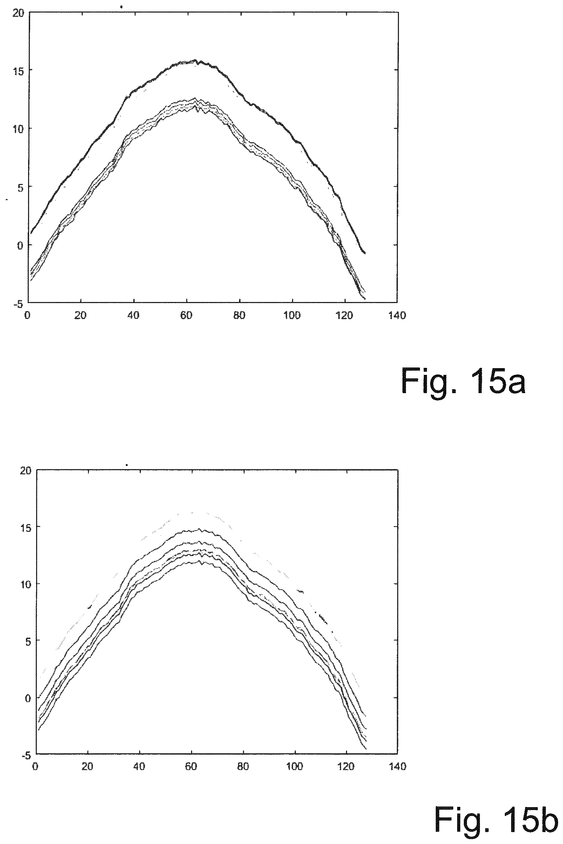

Prinzipiell stimmt der Phasenverlauf der beiden Stationen für ein Ziel (hier das mit der größten Amplitude) überein, da im vorliegenden Beispiel 128 aufeinanderfolgende Rampen gesendet wurden, wie in Figuren 15a, 15b zu erkennen ist (Fig. 15a für das erste Modul, Fig. 15b für das zweite Modul). Nach Korrektur aller Frequenzterme können die Spektrogramme als

$$S_{anl}(f) = A_a e^{j2\pi f_0\left((-1)^{a-1}(\tau+\tau_l) - \mu T_{off,l} + \delta\phi_{0,l}\right)} e^{j(-1)^{a-1}\phi_{an}} \cdot e^{j\gamma_l} \cdot \mathcal{F}\left\{e^{j\eta_l(t)}\right\} * \delta(f - \mu\tau), \qquad (6)$$

dargestellt werden, welche nun eine quasi konstante Beatfrequenz für ein Ziel in definiertem Abstand aufweisen. In diesem Schritt soll der grobe Einfluss von Phasenrauschen (angenähert als $\mathcal{F}\left\{e^{j\phi_{p,al}(t)}\right\} \approx e^{j\gamma_l}\mathcal{F}\left\{e^{j\eta_l(t)}\right\}$, also einem großen Anteil von Sweep zu Sweep und einem kleineren während einer (FMCW-)Rampe), sowie die Einflüsse des Timingoffsets, modelliert als $T_{off,l}$, auf die Phasenlage und unbekannte verbleibende Terme $\delta\phi_{0,l}$ der beiden Stationen korrigiert werden. Diese sind in Gleichung als $\mu T_{off,l} + \delta\phi_{0,l}$ enthalten und treten in beiden Stationen gleichermaßen auf. Zusammengefasst ergibt sich also eine Phasenverschiebung $\Gamma_{al} = T_{off,l} + \delta\phi_{0,l} + \gamma_l$ von Sweep zu Sweep (dargestellt in Figuren 15a, 15b).

Grundsätzlich ist die Bestimmung der Phase am größten auftretenden Peak eine Möglichkeit. Zum einen ist diese Phasenlage allerdings bei dicht benachbarten Zielen nur als Überlagerung ermittelbar, zum anderen bezieht diese Variante nur die Information von einem Ziel mit ein, was ein genereller Nachteil bei Mehrwegeausbreitung oder mehreren zu detektierenden Reflexionsstellen ist.

Daher wird an dieser Stelle das Argument des komplexen Standardskalarprodukts

$$\hat{\Gamma}_l = \frac{1}{8} \sum_n \arg\{\langle S_{1nl}^*(f), S_{2nl}(f)\rangle\}/2$$

für jeden (FMCW-)Sweep und jeden Einzelkanal ausgewertet und anschließend der Mittelwert gebildet (z. B. mit einem Vorfaktor 1/8 für 8 Empfangskanäle). Die Phasenbeziehung der Kanäle zueinander wird hierdurch nicht beeinflusst. Mit diesem Schätzergebnis kann der störende Anteil in Gleichung (6) korrigiert werden, was zu

$$S_{anl}(f) = A_a e^{j2\pi f_0((-1)^{a-1}(\tau+\tau_l))} e^{j(-1)^{a-1}\phi_{an}} \cdot \mathcal{F}\{e^{j\eta_l(t)}\} * \delta(f-\mu\tau), \tag{7}$$

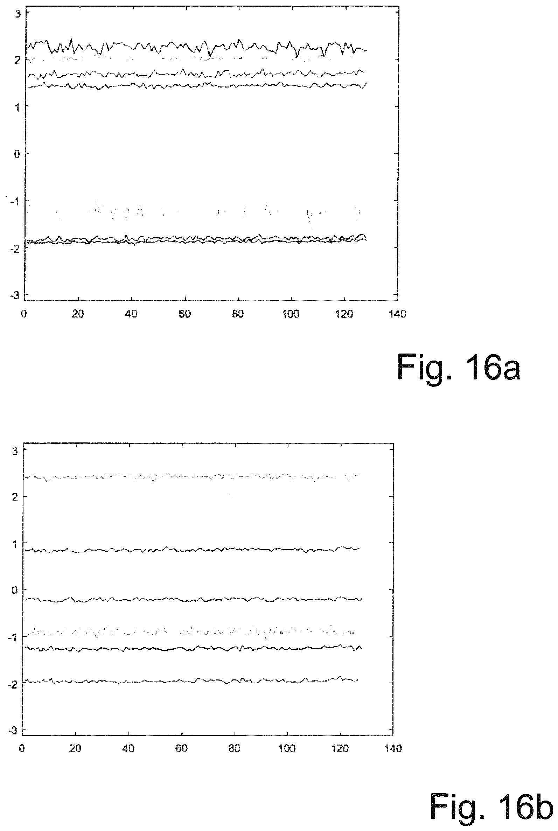

führt. Der Verlauf der Phase bei einem stehenden Ziel für beide Stationen und alle Kanäle ist in Figuren 16a, 16b dargestellt (für das erste Modul ion Fig. 16a, für das zweite Modul in Fig. 16b). Dieser weicht nur noch geringfügig von einer konstanten Funktion ab (verbleibende Abweichungen können ggf. im weiteren Verfahren korrigiert werden).

Eine hierauf folgende komplexe Konjugation der Signale vom zweiten Radar-Modul führt zu den Spektren

$$S_{anl}(f) = A_a e^{j2\pi f_0(\tau+\tau_l)} e^{j\phi_{an}} \cdot \mathcal{F}\{e^{j(-1)^{a-1}\eta_l(t)}\} * \delta(f-\mu\tau), \tag{8}$$

welche, im Wesentlichen, lediglich noch im Term $\mathcal{F}\{e^{j(-1)^{a-1}\eta_l(t)}\}$ von einer typischen Primärantwort abweichen. Dieser Anteil stellt den Einfluss des unkorrelierten Phasenrauschens dar, welcher zu einer Phasenabweichung innerhalb einer (FMCW-)Rampe bzw. eines (FMCW-)Sweeps führt.

In Summe kann ein Phasensprung zwischen benachbarten Rampen bei vielen Messungen ggf. zu groß sein, um ein Phasentracking durchzuführen. Insbesondere kann ein maximal erwarteter Phasensprung den Messbereich in der Dopplerfrequenz und somit in der Maximalgeschwindigkeit, welche detektiert werden kann, beschränken. Diese Problematik kann durch eine verbesserte Synchronisation der beiden Stationen reduziert werden. Eine verbleibende Abweichung nach einer Anpassung der Taktraten führt ggf. nicht (mehr) dazu, dass Phasensprünge über einen Eindeutigkeitsbereich zwischen benachbarten Sweeps hinaus auftreten.

Nachfolgen wird eine Anpassung und Superposition der Spektren beschrieben.

Vor der Überlagerung der beiden Spektren kann eine Anpassung noch derart erfolgen, dass eine eventuelle Phasenverschiebung des stärksten Ziels bei einem nicht-reziproken Kanal korrigiert wird. Weiterhin können die Amplituden dieses Ziels für beide Spektren angeglichen werden und/oder eine Normierung auf eine gemeinsame oder dritte Größe erfolgen. Nach diesen beiden Operationen kann sich die Darstellung für einen ausgewählten Kanal n zu

$$S_{anl}(f) = A e^{j2\pi f_0(\tau+\tau_l)} e^{j\phi_n} \cdot \delta(f-\mu\tau) * (1 + j(-1)^{a-1}\varepsilon_l(t))$$

ergeben, wobei das innerhalb eines Chirps (Sweeps) verbleibende Phasenrauschen durch Taylorentwicklung mit Abbruch nach dem linearen Term als $\mathcal{F}\{e^{j(-1)^{a-1}\eta_l(t)}\} \approx 1 + j(-1)^{a-1}\varepsilon_l(t)$ angenähert werden kann. Nach einer hierauf folgenden Addition ergibt sich ein (finales) Signalmodell

$$S_{nl}(f) = S_{1nl}(f) + S_{2nl}(f) = 2A e^{j2\pi f_0(\tau+\tau_l)} e^{j\phi_n} \cdot \delta(f-\mu\tau).$$

Nachfolgend wird ein korrigiertes Signalmodell beschrieben.

Das Signal des Kreuzpfads

$$S_{anl}(f) = A \cdot e^{j2\pi f_0\tau} \cdot e^{j2\pi f_0\tau_l} \cdot e^{j\phi_{an}} \cdot \delta(f-\mu\tau) \tag{8}$$

gleicht nun (vollständig) einer Primärantwort und kann somit vorzugsweise zur kohärenten Prozessierung verwendet werden. A repräsentiert hierbei die Amplitude, $e^{j2\pi f_0\tau}$ die Initialphase, $e^{j2\pi f_0\tau_l}$ den Doppleranteil, $e^{j\phi_{an}}$ die Winkelkomponente und $\delta(f-\mu\tau)$ die zugehörige Beatfrequenz. Im Fall einer Mehrwegeausbreitung oder bei mehreren Zielen ergibt sich die Modellierung

$$S_{anl}(f) = \sum_k A_k \cdot e^{j2\pi f_0 \tau_k} \cdot e^{j2\pi f_0 \tau_{kl}} \cdot e^{j\phi_{kan}} \cdot \delta(f - \mu\tau_k) \qquad (9)$$

wobei $k$ der Nummer des Einzelpfads entspricht.

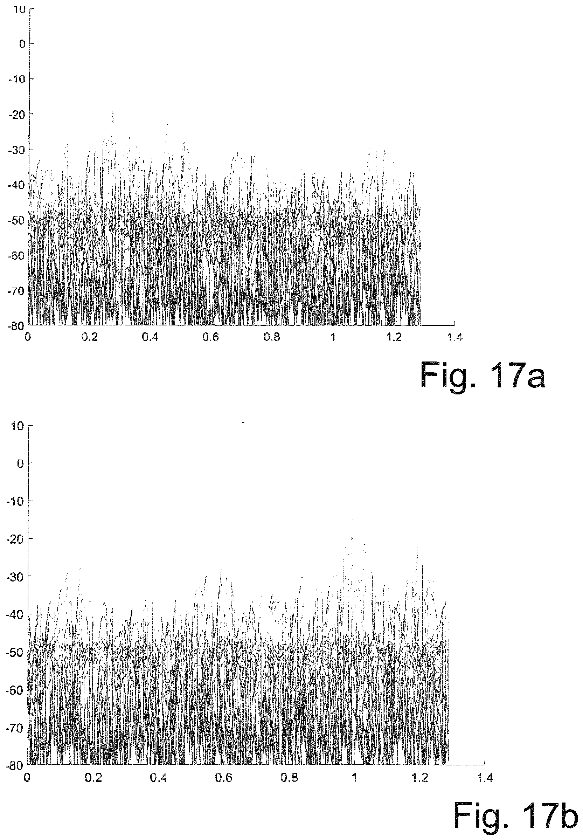

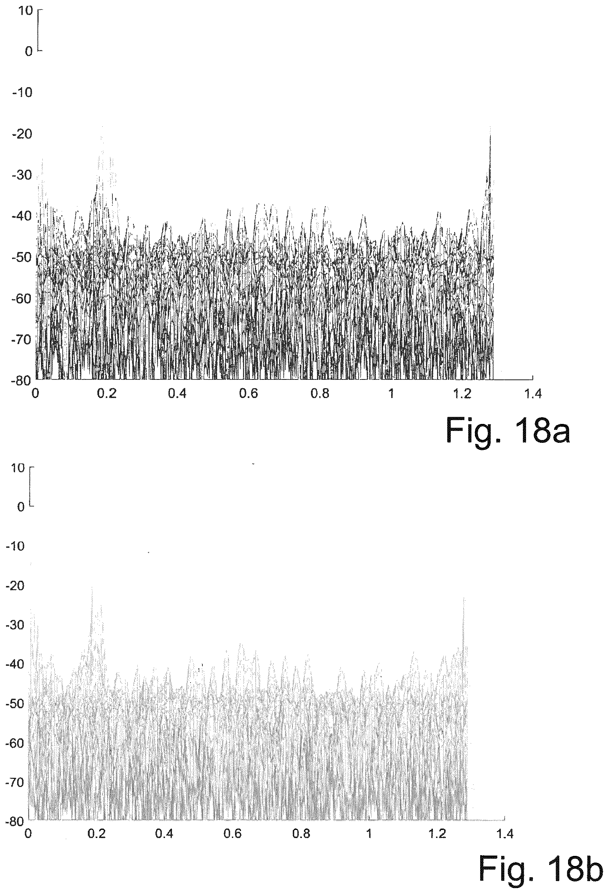

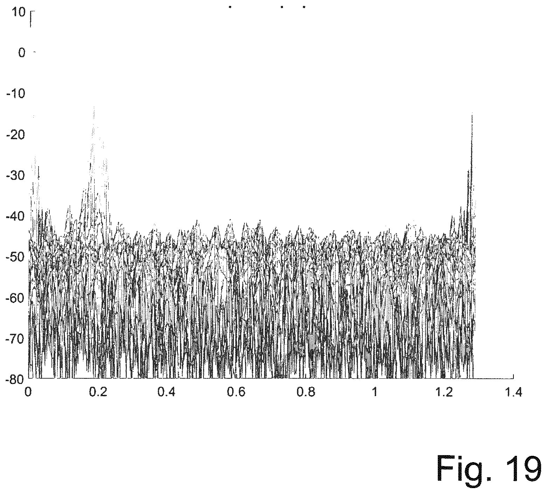

Mit den oben beschriebenen Korrekturen lässt sich ein verbesserter 2D Range-Doppler Plot bzw. einfacher Dopplerplot wie in . Figuren 17a, 17b erzeugen (die Plots ohne Korrektur der Phasenvariationen zeigen; Figuren 18a, 18b, zeigen Plots mit Korrektur der Phasenvariationen; Fig. 17a, 18a für das erste Modul, Fig. 18a, 18b für das zweite Modul), aus dem auch die Geschwindigkeit vergleichsweise genau ableitbar ist. Ein verbleibendes Phasenrauschen, welches auf dem Kreuzpfad wesentlich stärker ist als bei einer Primärradarantwort ist, macht sich in Form zufällig verteilter, kleiner Peaks bemerkbar. Diese sind über alle Geschwindigkeiten verteilt und (quasi) gleich im ersten und zweiten Modul (jedoch um 180 Grad phasenverschoben). Nach Addition von beiden 2D Spektren entsteht ein Spektrum (siehe Fig. 19), welches (ggf. bis auf ein vergleichsweise kleines Amplitudenrauschen) dem eines Primärradars (siehe Fig. 20a für das erste Modul und Fig. 20b für das zweite Modul) entspricht. Dies führt zu wesentlich mehr Messdynamik, wonach sich auch schwache Ziele (im Umfeld starker Ziele) erkennen lassen. Dargestellt ist diese Methode hier für einen einzelnen Kanal, da durch unterschiedliche Azimutwinkel ein zusätzlicher Phasenversatz entstehen kann.

Das eben beschriebene Verfahren zur Reduzierung von Störanteilen, insbesondere Phasenrauschen, hat (insbesondere im Automobilbereich) eine Reihe von Vorteilen. Insbesondere kann eine verbesserte SNR (Signal-to-Noise Ratio) und eine erhöhte Zuverlässigkeit erzielt werden. Weiterhin können Abstand und Geschwindigkeitsvektor eines Ziels mit vergleichsweise hoher Genauigkeit geschätzt werden, da zusätzliche Schätzwerte zur Verfügung stehen und genutzt werden können.

Eine (kohärente) Verarbeitung einer durch einen Doppler-Effekt verursachten Frequenzverschiebung kann auch über einen Kreuzpfad problemlos erfolgen. Phaseninformationen von einem ersten Radar-Modul und einem zweiten Radar-Modul können somit genutzt werden, um eine präzise Vermessung der Umgebung durchzuführen. Dadurch kann eine SAR-Prozessierung, insbesondere bei einer Automobil-Radaranwendung implementiert werden, um ein hoch aufgelöstes Bild der Umgebung zu generieren.

Eine Anwendung als Phasen-Monopols mit beiden Stationen kann dazu dienen, einen Azimut-Winkel sehr exakt schätzen zu können. Diese Schätzung kann auch in Verbindung mit bestehender Winkelinformation genutzt werden, um eine Genauigkeit weiter zu erhöhen.

Durch die Einspeisung eines externen, geregelten Taktes konnte erkannt werden, dass eine grobe Synchronisation (Vor-Synchronisation) grundsätzlich möglich ist, was beispielsweise über einen CAN-Bus (eines Kraftfahrzeugs) denkbar wäre. Dadurch kann sich ein Rechenaufwand des Verfahrens verringern und es kann zu einer geringeren Fehlerfortpflanzung kommen.

Durch weitere Informationen kann sich die Wahrscheinlichkeit einer Plausibilisierung von Radarzielen im Straßenverkehr erhöhen. Bei (direkter) Verwendung einer Messung des Kreuzpfads für jedes Ziel, kann eine zusätzliche Schätzung von Geschwindigkeit, Azimut-Winkel und Abstand zur Verfügung stehen, was insbesondere ein Tracking erleichtern kann.

Reflexionen von komplexen Objekten können vergleichsweise problemlos erkannt werden, ggf. auch wenn sie nicht in Richtung einer einfallenden Wellen gehen (bistatisches Radarprinzip). Eine Kombination mehrerer Radar-Module ermöglicht eine (deutliche) Verbesserung einer Schätzung einer Eigenbewegung des sich bewegenden Objekts (Fahrzeugs), da die Genauigkeit der Winkelmessung diese wesentlich beeinflusst.

Eine Kombination mehrerer Radar-Module in Elevationsrichtung ermöglicht eine deutliche Verbesserung einer Höhenschätzung, insbesondere mittels interferometrischem SAR, also einer Schätzung des Höhenprofils einer (kompletten) Umgebung eines sich bewegenden Objektes (Fahrzeugs).

Nachfolgend werden Aspekte und Ausführungsformen des Verfahrens I bzw. der Konfiguration I beschrieben. Die Bezugzeichen beziehen sich dabei auf die Figuren aus DE 10 2014 104 273 A1. Die Sende-Empfangseinheiten können Bestandteil der Radarmodule sein oder diese ausbilden:

1. Aspekt: Verfahren in einem Radarsystem, bei dem

- in einer ersten (nicht-kohärenten) Sende-Empfangseinheit (NKSE1) ein erstes Signal (sigTX1) erzeugt und über einen Pfad (SP) gesendet, insbesondere ausgestrahlt wird,
- in einer weiteren, insbesondere zweiten (nicht-kohärenten) Sende-Empfangseinheit (NKSE2) ein erstes Signal (sigTX2) erzeugt und über den Pfad (SP) gesendet, insbesondere ausgestrahlt wird,
- in der ersten Sende-Empfangseinheit (NKSE1) ein Vergleichssignal (sigC12) aus deren erstem Signal (sigTX1) und aus einem solchen von der weiteren Sende-Empfangseinheit (NKSE2) über den Pfad (SP) empfangenen ersten Signal (sigTX2) gebildet wird und

- in der weiteren Sende-Empfangseinheit (NKSE2) ein weiteres Vergleichssignal (sigC21) aus deren erstem Signal (sigTX2) und aus einem solchen von der ersten Sende-Empfangseinheit (NKSE1) über den Pfad (SP) empfangenen ersten Signal (sigTX1) gebildet wird,
- wobei das weitere Vergleichssignal (sigC21) von der weiteren Sende-Empfangseinheit (NKSE2) zu der ersten Sende-Empfangseinheit (NKSE1) übertragen, insbesondere kommuniziert wird.

2. Aspekt: Verfahren nach dem ersten Aspekt, bei dem ein Vergleichs-Vergleichssignal (sigC21; sigC12) aus diesem Vergleichssignal (sigC21) und dem weiteren Vergleichssignal (sigC21) gebildet wird.

3. Aspekt Verfahren nach zweiten Aspekt, bei dem das Vergleichs-Vergleichssignal (sigC21; sigC12), indem die beiden Vergleichssignale (sigC12, sigC21) miteinander verarbeitet - insbesondere konjungiert komplex multipliziert werden - einem mit einem kohärenten Radarsystem erzeugten Vergleichssignal entspricht.

4. Aspekt: Verfahren nach einem vorstehenden Aspekt, bei dem zumindest eines von dem Vergleichssignal (sigC12), dem weiteren Vergleichssignal (sigC21) oder dem Vergleichs-Vergleichssignal (sigC21; sigC12) durch zumindest eines von Mischen oder Korrelation gebildet wird.

5. Aspekt: Verfahren nach einem vorstehenden Aspekt, bei dem mindestens ein solches weiteres Vergleichssignal (sigC21; sigC12) zwischen den Sende-Empfangseinheiten (NKSE2; NKSE1) als zumindest eines von Daten, einem Daten enthaltenden Signal oder einem Daten rekonstruierbar enthaltenden Signal übertragen wird.

6. Aspekt: Verfahren nach einem vorstehenden Aspekt, bei dem zumindest eines der ersten Signale (sigTX1, sigTX2) als ein Sendesignal über den als Luftschnittstelle ausgebildeten Pfad (SP) gesendet wird.

7. Aspekt: Verfahren nach einem vorstehenden Aspekt, bei dem Zeitpunkte zum Senden der ersten Signale (sigTX1, sigTX2) derart koordiniert werden, dass sich die ersten Signale (sigTX1, sigTX2) zeitlich zumindest teilweise überdecken.

8. Aspekt: Verfahren nach einem vorstehenden Aspekt, bei dem aus zumindest einem Vergleichs-Vergleichssignal (sigC21; sigC12) eine Signallaufzeit (T12), die ein solches erstes Signal (sigTX1, sigTX2) für den Weg zwischen den Sende-Empfangseinheiten (NKSE1, NKSE2) benötigt, ermittelt wird, indem mindestens eines von einer Phase oder einem Phasenwert ($\varphi12$, $\varphi13$, ..., $\varphi1N$, $\varphi22$, $\varphi23$, $\varphi24$, ... $\varphi2N$, ..., $\varphi N\text{-}1N$) einer Frequenz, einem Amplituden-Verlauf oder einem Phasen-Verlauf des Vergleichs-Vergleichssignal (sigCC12) analysiert wird.

9. Aspekt: Verfahren nach einem vorstehenden Aspekt, bei dem zumindest eines der ersten Signale (sigTX1, sigTX2) als ein FMCW- oder OFDM-moduliertes Signal erzeugt und gesendet wird.

10. Aspekt: Verfahren nach einem vorstehenden Aspekt, bei dem zumindest eines der ersten Signale (sigTX1, sigTX2) als ein Multirampen-Signal erzeugt und gesendet wird.

11. Aspekt: Verfahren nach einem vorstehenden Aspekt, bei dem

- mehrere Vergleichs-Vergleichssignale (sigCC12), die mit zumindest zwei Sende-Empfangseinheiten (NKSE1, NKSE2), von denen sich zumindest eine der Sende-Empfangseinheiten (NKSE1, NKSE2) bewegt, zeitlich nacheinander gemessen werden und
- mit einem synthetische Apertur-Verfahren zumindest eines von einer Entfernung, einer Position, einer Geschwindigkeit oder das Vorhandensein einer der Sende-Empfangseinheiten (NKSE2, NKSE1) oder das Vorhandensein einer solchen Sende-Empfangseinheiten (NKSE2, NKSE1) oder zumindest eines von einer Entfernung, einer Position, einer Geschwindigkeit relativ zu einem Objekt (O) oder das Vorhandensein eines Objekts (O) bestimmt wird.

12. Aspekt: Radarsystem, bei dem

- zumindest eine erste (nicht-kohärente) Sende-Empfangseinheit (NKSE1) ausgebildet ist, ein erstes Signal (sigTX1) zu erzeugen und über einen Pfad (SP) zu senden, insbesondere auszustrahlen,
- zumindest eine weitere, insbesondere zweite (nicht-kohärenten) Sende-Empfangseinheit (NKSE2) ausgebildet ist, ein erstes Signal (sigTX2) zu erzeugen und über den Pfad (SP) zu senden, insbesondere auszustrahlen,
- die erste Sende-Empfangseinheit (NKSE1) ausgebildet ist, ein Vergleichssignal (sigC12) aus deren erstem Signal (sigTX1) und aus einem solchen von der weiteren Sende-Empfangseinheit (NKSE2) über den Pfad (SP) empfangenen ersten Signal (sigTX2) zu bilden,

- die weitere Sende-Empfangseinheit (NKSE2) ausgebildet ist, ein weiteres Vergleichssignal (sigC21) aus deren erstem Signal (sigTX2) und aus einem solchen von der ersten Sende-Empfangseinheit (NKSE1) über den Pfad (SP) empfangenen ersten Signal (sigTX1) zu bilden, und
- das weitere Vergleichssignal (sigC21) von der weiteren Sende-Empfangseinheit (NKSE2) zu der ersten Sende-Empfangseinheit (NKSE1) übertragen wird, insbesondere kommuniziert wird.

13. Aspekt: Radarsystem nach Aspekt 12, bei dem ein Vergleichs-Vergleichssignal (sigCC21; sigCC12) aus diesem Vergleichssignal (sigC21) und dem weiteren Vergleichssignal (sigC21) gebildet wird.

14. Aspekt: Radarsystem nach Aspekt 12 oder 13 mit drei oder mehr räumlich beabstandeten Sende-Empfangseinheiten (NKSE1, NKSE2, NKSE3, ..., NKSE-N), bei dem aus zwei oder mehr Vergleichs-Vergleichssignalen (sigCC12, sigCC12, sigCC13, sigCC22, ..., sigCC32), die mit mehr als zwei Paaren aus jeweils zwei der räumlich beabstandeten der Sende-Empfangseinheiten (NKSE1, NKSE2; NKSE-N, NKSE2) gemessen werden, eine Entfernung, eine Position, eine Geschwindigkeit oder das Vorhandensein einer der Sende-Empfangseinheiten (NKSE2, NKSE1) oder das Vorhandensein einer solchen Sende-Empfangseinheiten (NKSE2, NKSE1) oder zumindest eines von einer Entfernung, einer Position, einer Geschwindigkeit relativ zu einem Objekt (O) oder das Vorhandensein eines Objekts (O) bestimmt wird.

15. Aspekt: Radarsystem nach einem der Aspekte 12 bis 14, bei dem die erste Sende-Empfangseinheit (NKSE1) und zumindest eine solche weitere Sende-Empfangseinheit (NKSE2) und/oder eine Auswerteeinrichtung (P) ausgebildet sind zum Durchführen eines Verfahrens nach einem vorhergehenden Ansprüche.

16. Aspekt: Vorrichtung eines Radarsystems, insbesondere zum Durchführen eines Verfahrens nach einem der Aspekte 1 bis 11 und/oder in einem Radarsystem nach einem der Aspekt 12 bis 15, wobei die Vorrichtung

- ausgebildet ist als eine erste (nicht-kohärente) Sende-Empfangseinheit (NKSE1), insbesondere erste (nicht-kohärente) Sende-Empfangseinheit (NKSE1) und
- einen Signalgenerator und zumindest eine Antenne (TA1; RA1) aufweist, die ausgebildet sind, ein erstes Signal (sigTX1) zu erzeugen und über einen Pfad (SP) zu senden, insbesondere auszustrahlen,
- eine Anordnung aufweist, die ausgebildet ist, ein Vergleichssignal (sigC12) aus dem ersten Signal (sigTX1) und aus einem derartigen von einer weiteren Sende-Empfangseinheit (NKSE2) über den Pfad (SP) empfangenen ersten Signal (sigTX2) zu bilden
- und zumindest eines von
- einer Schnittstelle (CommTX) aufweist, die ausgebildet ist, das Vergleichssignal (sigC12) zu der weiteren Sende-Empfangseinheit (NKSE2) zu übertragen, insbesondere zu kommunizieren oder
- einer Schnittstelle (CommRX) aufweist, die ausgebildet ist, ein derartiges von der weiteren Sende-Empfangseinheit (NKSE2) erzeugtes weiteres Vergleichssignal (sigC21) mittels Übertragen, insbesondere Kommunizieren, in der ersten Sende-Empfangseinheit (NKSE1) zu erhalten.

17. Aspekt: Vorrichtung nach Aspekt 16 mit einer weiteren Vergleichseinheit (sigComp12), die ein Vergleichs-Vergleichssignal (sigCC12) bildet aus dem in der selben Sende-Empfangseinheit (NKSE1) gebildeten Vergleichssignal (sigC21) und dem zu dieser Sende-Empfangseinheit (NKSE1) übertragenen Vergleichssignal (sigC21).

18. Aspekt: Vorrichtung nach Aspekt 16 oder 17, bei der die zumindest eine Schnittstelle (CommTX, CommRX) eine Datenschnittstelle ist.

19. Aspekt: Vorrichtung nach einem der Aspekte 16 bis 18, bei der zwischen der Anordnung, die das Vergleichssignal (sigC12) ausgibt, und der weiteren Vergleichseinheit (sigComp12), die das Vergleichs-Vergleichssignal (sigCC12) bildet, ein Filter (FLT) angeordnet ist, wobei der Filter (FLT) an die Vergleichseinheit (sigComp12) das Vergleichssignal (sigC12) anlegt, wobei der Filter (FLT) ein weiteres in der dem Filter (FLT) vorgeschalteten Anordnung gebildetes Vergleichssignal (sigC11) nicht anlegt und das in der vorgeschalteten Anordnung gebildete Vergleichssignal (sigC11) unterdrückt oder an einem Anschluss bereitstellt.

20. Aspekt: Vorrichtung nach einem der Aspekt 16 bis 19, die eine Vielzahl von zueinander räumlich beabstandeten Empfangsantennen (RA1,1, ..., RA1,N; RA2,1, ..., RA2,N) aufweist, welcher jeweils eine Anordnung zugeordnet ist, die ausgebildet ist, jeweils ein Vergleichssignal (sigC21,1, sigC21,2, sigC21,3) aus dem erstem Signal (sigTX2) und aus einem derartigen von einer solchen weiteren Sende-Empfangseinheit (NKSE2) über den Pfad (SP) empfangenen ersten Signal (sigTX1) zu bilden.

Nachfolgend werden Aspekte und Ausführungsformen des Verfahrens II bzw. der Konfiguration II beschrieben. Die Bezugzeichen beziehen sich dabei auf die Figuren 1 bis 4 der vorliegenden Anmeldung. Die Sende-Empfangseinheiten können Bestandteil der Radarmodule sein oder diese ausbilden:

1. Aspekt: Verfahren zur Verringerung von Störungen durch Phasenrauschen in einem Radarsystem, bei dem

- in einer ersten (nicht-kohärenten) Sende-Empfangseinheit (NKSE1) ein erstes Signal (sigTX1) erzeugt und über einen Pfad (SP) gesendet, insbesondere ausgestrahlt wird,
- in einer weiteren, insbesondere zweiten (nicht-kohärenten) Sende-Empfangseinheit (NKSE2) ein erstes Signal (sigTX2) erzeugt und über den Pfad (SP) gesendet, insbesondere ausgestrahlt wird,
- die ersten Signale (sigTX1 und sigTX2) in der jeweils anderen Sende-Empfangseinheit auf direktem oder indirektem Weg empfangen werden und dort als Empfangssignale (sigRX12 und sigRX21) weiterverarbeitet werden,
- in der ersten Sende-Empfangseinheit (NKSE1) ein Vergleichssignal (sigC12) aus deren erstem Signal (sigTX1) und aus einem solchen von der weiteren Sende-Empfangseinheit (NKSE2) über den Pfad (SP) empfangenen ersten Signal (sigRTX2) gebildet wird und
- in der weiteren Sende-Empfangseinheit (NKSE2) ein weiteres Vergleichssignal (sigC21) aus deren erstem Signal (sigTX2) und aus einem solchen von der ersten Sende-Empfangseinheit (NKSE1) über den Pfad (SP) empfangenen ersten Signal (sigTX1) gebildet wird,
- wobei das weitere Vergleichssignal (sigC21) von der weiteren Sende-Empfangseinheit (NKSE2) zu der ersten Sende-Empfangseinheit (NKSE1) übertragen, insbesondere kommuniziert wird,
- wobei in einem ersten Schritt Abweichungen der Vergleichssignale (sigC21 und sigC12) die durch systematische Abweichungen in den Sende-Empfangseinheiten (NKSE2, NKSE1) hervorgerufen werden, kompensiert werden,
- wobei in einem zweiten Schritt zumindest ein komplexer Wert aus einem ersten der beiden Vergleichssignale oder aus einem Signal, das aus diesem ersten Vergleichssignal abgeleitet wurde, dazu verwendet wird, zumindest einen komplexen Wert des zweiten der beiden Vergleichssignale oder einen Wert eines Signals, das aus diesem zweiten Vergleichssignal abgeleitet wurde, anzupassen und so ein angepasstes Signal (sigCC) zu bilden,
- wobei die Anpassung derart geschieht, dass durch eine mathematische Operation die vektorielle Summe oder die Differenz der komplexen Werte gebildet wird oder die Summe oder die Differenz der Phasen der komplexen Werte gebildet wird.

2. Aspekt: Verfahren nach Aspekt 1, wobei die gesendeten Signale (sigTX1 und SigTX2) FMCW moduliert sind.

3. Aspekt: Verfahren nach Aspekt 1 oder 2, wobei ein Taktratenabgleich, insbesondere von Signalquellen der ersten Signale (sigTX1 und sigTX2), über ein Bussystem, vorzugsweise einen Kommunikationsbus, erfolgt und/oder wobei ein Taktratenabgleich, insbesondere von Taktraten von Signalquellen der ersten Signale (sigTX1 und sigTX2), über Funkwellen und/oder über eine Kabelverbindung, insbesondere bei Betrieb als Primärradar, erfolgt.

4. Aspekt: Verfahren nach einem der vorangehenden Aspekte, wobei eine Synchronisation der (nicht-kohärenten) Sende-Empfangseinheiten (NKSE1, NKSE2), insbesondere eine Vorsynchronisation durch eine Bestimmung einer Frequenz-Drift über mehrere Rampen nacheinander erfolgt, insbesondere bei Verwendung eines Sekundärradars.

5. Aspekt: Verfahren nach einem der vorangehenden Aspekte, wobei ein Offset, insbesondere ein Zeitoffset und/oder ein Frequenzoffset, über ein Bussystem bestimmt wird, vorzugsweise bei Betrieb als Primärradar.

6. Aspekt: Verfahren nach einem der vorangehenden Aspekte, wobei ein/der Offset, insbesondere ein/der Zeitoffset und/oder ein/der Frequenzoffset, über eine Auswertung einer Position von, insbesondere korrigierten, Maxima der Spektren der Vergleichssignale (sigC12 und sigC21), bestimmt wird.

7. Aspekt: Verfahren nach einem der vorangehenden Aspekte, wobei die erste und/oder die weitere (nicht-kohärente) Sende- und Empfangseinheit mindestens eine Auswerteeinrichtung zur Durchführung der einzelnen Verfahrensschritte, insbesondere Berechnungen und Auswertungen aufweist, wobei die jeweilige Auswerteeinrichtung ggf. eine körperlich eigenständige Auswerteeinrichtung ist, die an die jeweilige Sende- und Empfangseinheit bzw. die übrigen Komponenten der jeweiligen Sende- und Empfangseinheit angeschlossen ist oder

ggf. in die erste und/oder die weitere (nicht-kohärente) Sende- und Empfangseinheit, beispielsweise in einem gemeinsamen Gehäuse und/oder als Baueinheit, integriert ist.

8. Aspekt: Verfahren nach einem der vorangehenden Aspekte, wobei die Vergleichssignale (sigC12 und sigC21) zu einer, insbesondere gemeinsamen, Auswerteeinheit übertragen werden und dort zur Auswertung beide vorliegen, wobei die gemeinsame Auswerteeinheit, optional, die erste (nicht-kohärente) Sende-Empfangseinheit (NKSE1) oder, optional, die zweite (nicht-kohärente) Sende-Empfangseinheit (NKSE2) oder, optional, eine andere, insbesondere separate, Auswerteeinheit ist.

9. Aspekt: Verfahren nach einem der vorangehenden Aspekte, wobei die ersten Signale (TX1 und TX2) zumindest zeitlich überlappend gesendet werden, wobei das weitere erste Signal (TX2) der weiteren (nicht-kohärenten) Sende-Empfangseinheit (NKSE2) vorzugsweise zumindest während der Hälfte der Signaldauer des ersten Signals (TX1) der ersten (nicht-kohärenten) Sende-Empfangseinheit (NKSE2), weiter vorzugsweise zumindest annähernd gleichzeitig, gesendet wird.

10. Aspekt: Verfahren nach einem der vorangehenden Aspekte, wobei vor der mathematischen Operation die Spektren der Vergleichssignale auf den höchsten Wert normalisiert werden.

11. Aspekt: System zur Verringerung von Störungen durch Phasenrauschen in einem Radarsystem mit Einheiten zur Durchführung des Verfahrens nach einem der vorangehenden Ansprüche, insbesondere umfassend:

- eine erste (nicht-kohärente) Sende-Empfangseinheit (NKSE1) zur Erzeugung eines ersten Signals (sigTX1) und zum Senden, insbesondere Ausstrahlen, des ersten Signals (sigTX1) über einen Pfad (SP),

- eine weitere, insbesondere zweite, (nicht-kohärente) Sende-Empfangseinheit (NKSE2) zur Erzeugung eines ersten Signals (sigTX2) und zum Senden (insbesondere Ausstrahlen) des ersten Signals (sigTX2) über den Pfad (SP),

- wobei die (nicht-kohärenten) Sende-Empfangseinheiten (NKSE1 und NKSE2) ausgebildet sind, die ersten Signale (sigTX1 und sigTX2) in der jeweils anderen Sende-Empfangseinheit auf direktem oder indirektem Weg zu empfangen und dort als Empfangssignale (sigRX12 und sigRX21) weiter zu verarbeiten,

- wobei die erste Sende-Empfangseinheit (NKSE1) ausgebildet ist, ein Vergleichssignal (sigC12) aus deren ersten Signal (sigTX1) und aus einem solchen von der weiteren Sende-Empfangseinheit (NKSE2) über den Pfad (SP) empfangenen ersten Signal (sigRTX2) zu bilden und

- wobei die weitere Sende-Empfangseinheit (NKSE2) ausgebildet ist, ein weiteres Vergleichssignal (sigC21) aus deren ersten Signal (sigTX2) und aus einem solchen von der ersten Sende-Empfangseinheit (NKSE1) über den Pfad (SP) empfangenen ersten Signal (sigTX1) zu bilden.

- wobei eine Übertragungseinheit vorgesehen ist, um das weitere Vergleichssignal (sigC21) von der weiteren Sende-Empfangseinheit (NKSE2) zu der ersten Sende-Empfangseinheit (NKSE1) zu übertragen, insbesondere zu kommunizieren,

- wobei mindestens eine Auswerteeinheit vorgesehen ist, die ausgebildet ist, um in einem ersten Schritt Abweichungen der Vergleichssignale (sigC21 und sigC12), die durch systematische Abweichungen in den Sende-Empfangseinheiten (NKSE2, NKSE1) hervorgerufen werden, zu kompensieren und um in einem zweiten Schritt zumindest einen komplexen Wert aus einem ersten der beiden Vergleichssignale oder aus einem Signal, das aus diesem ersten Vergleichssignal abgeleitet wurde, dazu zu verwenden, zumindest einen komplexen Wert des zweiten der beiden Vergleichssignale oder einen Wert eines Signals, das aus diesem zweiten Vergleichssignal abgeleitet wurde, anzupassen und so ein angepasstes Signal (sigCC) zu bilden, wobei die Anpassung derart geschieht, dass durch eine mathematische Operation die vektorielle Summe oder die Differenz der komplexen Werte gebildet wird oder die Summe oder die Differenz der Phasen der komplexen Werte gebildet wird.

12. Aspekt: System nach Aspekt 11, wobei ein Bussystem, insbesondere ein Kommunikationsbus, für einen Taktratenabgleich, insbesondere von Signalquellen der ersten Signale (sigTX1 und sigTX2), vorgesehen ist, und/oder wobei ein Bussystem für die Bestimmung eines Offsets, insbesondere Zeitoffsets und/oder Frequenzoffsets, vorgesehen ist.

13. Aspekt: System nach einem der Aspekte 11 oder 12, wobei eine gemeinsame Sende- und Empfangsantenne in der ersten und/oder der weiteren (nicht-kohärenten) Sende-Empfangseinheit (NKSE1 und/oder NKSE2) vorgesehen ist und/oder
wobei ein Transmissionsmischer in dem Pfad (SP) vorgesehen ist.

14. Aspekt: Verwendung des Verfahrens nach einem der Aspekte 1 bis 10 für ein System mit zumindest je einer gemeinsamen Sende- und Empfangsantenne in der ersten und/oder zweiten (nicht-kohärenten) Sende-Empfangseinheit (NKSE1 und/oder NKSE2).

15. Aspekt: Verwendung des Systems nach einem der Aspekte 11 bis 13 zur Verringerung von Störungen durch Phasenrauschen in einem Radarsystem.

An dieser Stelle sei darauf hingewiesen, dass alle oben beschriebenen Teile bzw. Funktionen für sich alleine gesehen und in jeder Kombination, insbesondere die in den Zeichnungen dargestellten Details, als erfindungswesentlich beansprucht werden. Abänderungen hiervon sind dem Fachmann geläufig.


**Patentansprüche**

1. Radar-System zur Erfassung eines Umfeldes eines Objektes, insbesondere eines sich bewegenden Objektes, insbesondere eines Fahrzeuges und/oder einer Transportvorrichtung, wie insbesondere eines Kranes, wobei das System auf dem Objekt montiert oder montierbar ist,
wobei das Radar-System mindestens zwei nicht-kohärente Radarmodule (RM 1, RM 2, ..., RM N) mit mindestens einer Sende- und mindestens einer Empfangsantenne umfasst,
wobei die Radarmodule (RM 1, RM 2, ..., RM N) auf dem Objekt verteilt angeordnet oder anordenbar sind,
wobei mindestens eine Auswerteeinrichtung vorgesehen ist, die konfiguriert ist, Sende- und Empfangssignale der Radarmodule zu modifizierten Messsignalen zu verarbeiten derart, dass die modifizierten Messsignale zueinander kohärent sind,
wobei das System, insbesondere die Auswerteeinrichtung konfiguriert ist, einen Phasenrauschanteil in einen Term für eine Variation innerhalb eines Messspektrums und eine Variation von Messspektrum zu Messspektrum zu gliedern, wobei die Variation von Messspektrum zu Messspektrum vorzugsweise als erster separater Schritt bestimmt wird.

2. System nach Anspruch 1, wobei die Variation des Phasenrauschanteils von Messspektrum zu Messspektrum als gemeinsamer Anteil in beiden Stationen aus der Variation der Phase in jedem Messspektrum bestimmt wird, insbesondere über das Skalarprodukt der beiden Messspektren.

3. System nach einem der Ansprüche 1 oder 2, wobei eine Addition zweier/der beiden Messspektren erfolgt, wobei optional vorher eine Normierung der Amplituden der Messspektren auf ein absolutes Normal oder zueinander erfolgt.

4. System nach einem der vorangehenden Ansprüche, wobei die mindestens zwei Radarmodule über ein Bussystem miteinander verbunden sind.

5. System nach einem der vorangehenden Ansprüche, wobei

- in einem ersten Radarmodul (RM 1) ein erstes Signal (sigTX1) erzeugt und über einen Pfad (SP) gesendet, insbesondere ausgestrahlt wird,
- in einem weiteren, insbesondere zweiten Radarmodul (RM 2) ein weiteres erstes Signal (sigTX2) erzeugt und über den Pfad (SP) gesendet, insbesondere ausgestrahlt wird,
- in der Auswerteeinrichtung, insbesondere in dem ersten Radarmodul ( RM 1) ein erstes Vergleichssignal (sigC12) aus dem erstem Signal (sigTX1) des ersten Radarmoduls und aus einem solchen von dem weiteren Radarmodul (RM 2), über den Pfad (SP) empfangenen, ersten Signal (sigTX2) gebildet wird und
- in der Auswerteeinrichtung, insbesondere in dem weiteren Radarmodul ( RM 2) ein weiteres Vergleichssignal (sigC21) aus dem erstem Signal des weiteren Radarmoduls (sigTX2) und aus einem solchen von dem ersten Radarmodul (RM 1), über den Pfad (SP) empfangenen, ersten Signal (sigTX1) gebildet wird,
- wobei das weitere Vergleichssignal (sigC21) vorzugsweise von dem weiteren Radarmodul (RM 2) zu dem ersten Radarmodul (RM 1) übertragen, insbesondere kommuniziert wird.

6. System nach einem der vorangehenden Ansprüche, insbesondere nach Anspruch 5, wobei das System, insbesondere die Auswerteeinrichtung zur Bildung eines Vergleichs-Vergleichssignal (sigCC21; sigCC12) aus dem ersten Vergleichssignal (sigC21) und dem weiteren Vergleichssignal (sigC21) konfiguriert ist.

7. System nach einem der vorangehenden Ansprüche, insbesondere nach Anspruch 5 oder 6, wobei das System, insbesondere die Auswerteeinrichtung konfiguriert ist, um in einem ersten Schritt Abweichungen der Vergleichssignale (sigC21 und sigC12), die durch systematische Abweichungen in den Radarmodulen (RM 2, RM 1) hervorgerufen werden, zu kompensieren und um in einem zweiten Schritt zumindest einen komplexen Wert aus einem ersten der beiden Vergleichssignale oder aus einem Signal, das aus diesem ersten Vergleichssignal abgeleitet wurde, dazu zu verwenden, zumindest einen komplexen Wert des zweiten der beiden Vergleichssignale oder einen Wert eines Signals, das aus diesem zweiten Vergleichssignal abgeleitet wurde, anzupassen und so ein angepasstes Signal (sigCC) zu bilden, wobei die Anpassung derart geschieht, dass durch eine mathematische Operation die vektorielle Summe oder die Differenz der komplexen Werte gebildet wird oder die Summe oder die Differenz der Phasen der komplexen Werte gebildet wird.

8. System nach einem der vorangehenden Ansprüche, insbesondere nach Anspruch 6, wobei das Vergleichs-Vergleichssignal (sigC21; sigC12), indem die beiden Vergleichssignale (sigC12, sigC21) miteinander verarbeitet - insbesondere konjungiert komplex multipliziert werden - einem mit einem kohärenten Radarsystem erzeugten Vergleichssignal entspricht.

9. System nach einem der vorangehenden Ansprüche, wobei ein erstes und/oder ein zweites Radarmodul (RM 1, RM 2) mindestens eine, vorzugsweise mindestens zwei Sendeantenne(n) und/oder mindestens eine, vorzugsweise mindestens zwei Empfangsantenne(n) aufweist/aufweisen und/oder
wobei ein/das erste und/oder ein/das zweite Radarmodul (RM 1, RM 2) höchstens vier, vorzugsweise höchstens drei Sendeantennen und/oder höchstens fünf, vorzugsweise höchstens vier Empfangsantennen aufweist/aufweisen.

10. System nach einem der vorangehenden Ansprüche, wobei die Radarmodule (RM 1, RM 2, ..., RM N) so weit auseinander angeordnet sind, dass eine aus den Radarmodulen resultierende Apertur unterbesetzt ist und/oder wobei die Radarmodule einen Abstand von mindestens 5 cm, vorzugsweise mindestens 10 cm, weiter vorzugsweise mindestens 40 cm gegeneinander aufweisen.

11. System nach einem der vorangehenden Ansprüche, wobei das System, insbesondere die Auswerteeinrichtung konfiguriert ist, eine Winkellage einer Umgebungsstruktur mittels Phasenmonopuls-Verfahren und/oder mittels eines Verfahrens im Zustandsraum zu schätzen, insbesondere zu bestimmen.

12. System nach einem der vorangehenden Ansprüche, wobei das System, insbesondere die Auswerteeinrichtung konfiguriert ist, eine Umgebungsstruktur mittels Holographie-Verfahren zu erfassen, vorzugsweise mittels Holografie-Verfahren eine Winkellage und/oder oder eine (vektorielle) (relative) Geschwindigkeit und/oder eine (vektorielle) (relative) Beschleunigung der Umgebungsstruktur zu schätzen, insbesondere zu bestimmen und/oder wobei das System, insbesondere die Auswerteeinrichtung konfiguriert ist, eine Kalibration mittels Holografie-Verfahren durchzuführen.

13. System nach einem der vorrangehenden Ansprüche, wobei das System, insbesondere die Auswerteeinrichtung konfiguriert ist, eine laterale Geschwindigkeit bzw. einen Geschwindigkeitsvektor, insbesondere mittels eines Verfahrens zum Vergleich einer Änderung von Differenzphasen von Empfangskanälen, zu bestimmen und/oder wobei das System, insbesondere die Auswerteeinrichtung konfiguriert ist, eine laterale Beschleunigung bzw. einen Beschleunigungsvektor, insbesondere mittels eines Verfahrens zum Vergleich einer Änderung von Differenzphasen von Empfangskanälen, zu bestimmen.

14. System nach einem der vorangehenden Ansprüche, wobei das System, insbesondere die Auswerteeinrichtung für eine SAR Anwendung und/oder ein Bildgebungsverfahren konfiguriert ist.

15. System nach einem der vorangehenden Ansprüche, wobei die Radarmodule (RM 1, RM 2, ..., RM N) auf dem Objekt auf unterschiedlicher Höhe angeordnet oder anordenbar sind, insbesondere zur Vermessung einer Höhe eines Umgebungsobjektes in einem Umfeld des Objektes, vorzugsweise mittels interferometrischer SAR-Prozessierung.

16. Bewegbares Objekt, insbesondere Fahrzeug, vorzugsweise Kraftfahrzeug, weiter vorzugsweise Automobil und/oder Transportvorrichtung, wie insbesondere Kran oder ein Teil eines Kranes, umfassend ein System nach einem der vorangehenden Ansprüche.

17. Verfahren zur Erfassung eines Umfeldes eines Objektes, insbesondere eines sich bewegenden Objektes, insbesondere eines Fahrzeuges und/oder einer Transportvorrichtung, wie insbesondere eines Kranes oder eines Teiles eines Kranes, insbesondere unter Verwendung des Systems nach einem der vorangehenden Ansprüche 1 bis 15 und/oder des bewegbaren Objektes nach Anspruch 16, wobei auf und/oder in dem Objekt mindestens zwei nicht-kohärente Radarmodule (RM 1, RM 2, ..., RM N) verteilt angeordnet sind, wobei Sende- und Empfangssignale der Radarmodule zu modifizierten Messsignalen verarbeitet werden derart, dass die modifizierten Messsignale zueinander kohärent sind, wobei ein Phasenrauschanteil in einen Term für eine Variation innerhalb eines Messspektrums und eine Variation von Messspektrum zu Messspektrum gegliedert wird, wobei die Variation von Messspektrum zu Messspektrum vorzugsweise als erster separater Schritt bestimmt wird.

18. Verfahren nach Anspruch 17, wobei die Variation des Phasenrauchanteils von Messspektrum zu Messspektrum als gemeinsamer Anteil in beiden Stationen aus der Variation der Phase in jedem Messspektrum bestimmt wird, insbesondere über das Skalarprodukt der beiden Messspektren.

19. Verfahren nach einem der Ansprüche 17 oder 18, wobei eine Addition zweier/der beiden Messspektren erfolgt, wobei optional vorher eine Normierung der Amplituden der Messspektren auf ein absolutes Normal oder zueinander erfolgt.

20. Verfahren nach einem der Ansprüche 17 bis 19, wobei

- in einem ersten Radarmodul (RM 1) ein erstes Signal (sigTX1) erzeugt und über einen Pfad (SP) gesendet, insbesondere ausgestrahlt wird,
- in einem weiteren, insbesondere zweiten Radarmodul (RM 2) ein weiteres erstes Signal (sigTX2) erzeugt und über den Pfad (SP) gesendet, insbesondere ausgestrahlt wird,
- ein erstes Vergleichssignal (sigC12) aus dem erstem Signal (sigTX1) des ersten Radarmoduls und aus einem solchen von dem weiteren Radarmodul (RM 2), über den Pfad (SP) empfangenen, ersten Signal (sigTX2) gebildet wird und
- ein weiteres Vergleichssignal (sigC21) aus dem erstem Signal des weiteren Radarmoduls und aus einem solchen von dem ersten Radarmodul (RM 1), über den Pfad (SP) empfangenen, ersten Signal (sigTX1) gebildet wird,
- wobei das weitere Vergleichssignal (sigC21) vorzugsweise von dem weiteren Radarmodul (RM 2) zu dem ersten Radarmodul (RM 1) übertragen, insbesondere kommuniziert wird und/oder

wobei vorzugsweise ein Vergleichs-Vergleichssignal (sigCC21; sigCC12) aus dem ersten Vergleichssignal (sigC21) und dem weiteren Vergleichssignal (sigC21) gebildet wird und/oder wobei in einem ersten Schritt Abweichungen der Vergleichssignale (sigC21 und sigC12), die durch systematische Abweichungen in den Sende-Empfangseinheiten (RM 2, RM 1) hervorgerufen werden, kompensiert werden und in einem zweiten Schritt zumindest ein komplexer Wert aus einem ersten der beiden Vergleichssignale oder aus einem Signal, das aus diesem ersten Vergleichssignal abgeleitet wurde, dazu verwendet wird, zumindest einen komplexen Wert des zweiten der beiden Vergleichssignale oder einen Wert eines Signals, das aus diesem zweiten Vergleichssignal abgeleitet wurde, anzupassen und so ein angepasstes Signal (sigCC) zu bilden, wobei die Anpassung derart geschieht, dass durch eine mathematische Operation die vektorielle Summe oder die Differenz der komplexen Werte gebildet wird oder die Summe oder die Differenz der Phasen der komplexen Werte gebildet wird.

21. Verwendung eines Systems nach einem der Ansprüche 1 bis 16 und/oder eines bewegbaren Objektes nach Anspruch 17 und/oder eines Verfahrens nach einem der Ansprüche 18 oder 19 zur Erfassung eines Umfeldes eines Objekts, insbesondere sich bewegenden Objektes, insbesondere eines Fahrzeuges und/oder einer Transportvorrichtung, wie insbesondere eines Kranes oder eines Teiles eines Kranes, insbesondere zur Schätzung, vorzugsweise zur Bestimmung einer Entfernung und/oder einer Winkellage und/oder einer (vektoriellen) (relativen) Geschwindigkeit und/oder einer (vektoriellen) (relativen) Beschleunigung und/oder zur Bilderzeugung einer Umgebungsstruktur.

Fig. 1

Fig. 2

ZF-Station A

Q

| Unkorreliertes Empfänger-rauschen |

Q

| Korreliertes Phasenrauschen |

| Korreliertes Phasenrauschen jetzt als additives Signal interpretiert |

ZF-Station B

Q

Q

# Fig. 3

Beatsignale aller Rampen: NKSE1     Beatsignale aller Rampen: NKSE2

# Fig. 4

RM 1    11    12    13    14

RM 2    11    14    13    12

RM N    11    12    13    14

## Fig. 5

RM 3

RM 2

RM 1

RM 4

## Fig. 6a

RM 2

RM 3

RM 1

## Fig. 6b

RM 6

RM 5

RM 4

RM 2

RM 3

RM 1

RM 7

RM 8

## Fig. 6c

Fig. 7

Fig. 8

Fig. 9

Fig. 10

Fig. 11a

Fig. 11b

Fig. 12a

Fig. 12b

Fig. 13a

Fig. 13b

Fig. 14a

Fig. 14b

Fig. 15a

Fig. 15b

Fig. 16a

Fig. 16b

Fig. 17a

Fig. 17b

Fig. 18a

Fig. 18b

Fig. 19

Fig. 20a

Fig. 20b

Europäisches
Patentamt

European
Patent Office

Office européen
des brevets

**EUROPÄISCHER RECHERCHENBERICHT**

Nummer der Anmeldung

EP 19 20 9160

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X,D | DE 10 2014 104273 A1 (FRIEDRICH ALEXANDER UNIVERSITÄT ERLANGEN NÜRNBERG [DE]; SYMEO GMBH [DE] 1. Oktober 2015 (2015-10-01) * Absätze [0010], [0103] - Absatz [0106]; Abbildung 3 * ----- | 1-21 | INV.<br>G01S7/40<br>G01S7/35<br>G01S13/00<br>G01S13/90 |
| A | KONG SUNWOO ET AL: "Wireless Cooperative Synchronization of Coherent UWB MIMO Radar", IEEE TRANSACTIONS ON MICROWAVE THEORY AND TECHNIQUES, PLENUM, USA, Bd. 62, Nr. 1, 1. Januar 2014 (2014-01-01), Seiten 154-165, XP011536024, ISSN: 0018-9480, DOI: 10.1109/TMTT.2013.2291541 [gefunden am 2014-01-01] * Zusammenfassung; Abbildungen 1,4,5 * ----- | 1,17 | |
| A | FRISCHEN ANDREAS ET AL: "A Cooperative MIMO Radar Network Using Highly Integrated FMCW Radar Sensors", IEEE TRANSACTIONS ON MICROWAVE THEORY AND TECHNIQUES, PLENUM, USA, Bd. 65, Nr. 4, 1. Februar 2017 (2017-02-01), Seiten 1355-1366, XP011644690, ISSN: 0018-9480, DOI: 10.1109/TMTT.2016.2647701 [gefunden am 2017-04-03] * sec. 1, V.C, VII.B, VIII; Abbildung 1 * ----- | 1,17 | RECHERCHIERTE SACHGEBIETE (IPC)<br><br>G01S |

Der vorliegende Recherchenbericht wurde für alle Patentansprüche erstellt

| Recherchenort | Abschlußdatum der Recherche | Prüfer |
|---|---|---|
| München | 16. April 2020 | Rudolf, Hans |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

........................................................................

& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 19 20 9160

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

16-04-2020

| Im Recherchenbericht angeführtes Patentdokument | Datum der Veröffentlichung | Mitglied(er) der Patentfamilie | Datum der Veröffentlichung |
|---|---|---|---|
| DE 102014104273 A1 | 01-10-2015 | CN 106461770 A | 22-02-2017 |
| | | DE 102014104273 A1 | 01-10-2015 |
| | | EP 3123199 A2 | 01-02-2017 |
| | | EP 3588134 A1 | 01-01-2020 |
| | | JP 2017513024 A | 25-05-2017 |
| | | KR 20160138065 A | 02-12-2016 |
| | | US 2017176583 A1 | 22-06-2017 |
| | | WO 2015144134 A2 | 01-10-2015 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102014104273 A1
- DE 102016100107
- EP 2017050056 W
- DE 102015121724
- EP 201607596 W
- US 6317075 B1
- US 7940743 B
- DE 102008010536
- DE 10157931
- DE 102009030076

**In der Beschreibung aufgeführte Nicht-Patentliteratur**

- **D. ZANKL et al.** Hardware Realization of a 2 m x 1 m Fully Electronic Real-Time mm-Wave Imaging System, A. Schiessl, A. Genghammer, S. Ahmed, L.-P. Schmidt, EUSAR 2012, oder BLASTDAR - A Large Radar Sensor Array System for Blast Furnace Burden Surface Imaging. *IEEE Sensor Jounal,* Oktober 2015, vol. 15 (10
- **R. SCHMIDT.** Multiple Emitter - Location and Signal - Parameter Estimation. *IEEE TRANSACTIONS ON ANTENNAS AND PROPAGATION,* Marz 1986, vol. AP-34 (3
- High-Resolution Frequency-Wavenumber Spectrum Analysis. *J. Capon, Proceedings of the IEEE,* August 1969, vol. 57 (8
- **S. ROEHR ; P. GULDEN ; M. VOSSIEK.** Precise Distance and Velocity Measurement for Real Time Locating in Multipath Environments Using a Frequency-Modulated Continuous-Wave Secondary Radar Approach. *IEEE Trans. Microw. Theory Tech.,* Oktober 2008, vol. 56 (10), 2329-2339
- **F. ALI ; G. BAUER ; M. VOSSIEK.** A Rotating Synthetic Aperture Radar Imaging Concept for Robot Navigation. *IEEE TRANSACTIONS ON MICROWAVE THEORY AND TECHNIQUES,* Juli 2014, vol. 62 (7
- **M. A. RICHARDS.** A Beginner's Guide to Interferometric SAR Concepts and Signal Processing. *IEEE Aerospace and Electronic Systems Magazine,* 2007, vol. 22 (9), 5-29